Europäisches Patentamt

European Patent Office

Office européen des brevets

(19)

(11) **EP 0 928 309 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.⁷: **C08J 3/205**, C08L 51/04, B29B 13/06, B29C 47/40, B29C 47/64, B29C 47/76

(21) Anmeldenummer: **97910284.5**

(22) Anmeldetag: **12.09.1997**

(86) Internationale Anmeldenummer:
**PCT/EP97/05000**

(87) Internationale Veröffentlichungsnummer:
**WO 98/13412 (02.04.1998 Gazette 1998/13)**

(54) **VERFAHREN ZUR HERSTELLUNG VON THERMOPLASTEN**

PROCESS FOR PRODUCING THERMOPLASTICS

PROCEDE DE PRODUCTION DE THERMOPLASTIQUES

(84) Benannte Vertragsstaaten:
**AT BE CH DE ES FR GB IT LI NL**

(30) Priorität: **26.09.1996 DE 19639465**

(43) Veröffentlichungstag der Anmeldung:
**14.07.1999 Patentblatt 1999/28**

(73) Patentinhaber: **BASF AKTIENGESELLSCHAFT**
**67056 Ludwigshafen (DE)**

(72) Erfinder:
• **GÜNTHERBERG, Norbert**
**D-67346 Speyer (DE)**
• **HOFMANN, Jürgen**
**D-67069 Ludwigshafen (DE)**
• **MAILAHN, Elmar**
**D-67547 Worms (DE)**
• **OHLIG, Hilmar**
**D-67657 Kaiserslautern (DE)**
• **CZAUDERNA, Bernhard**
**D-69493 Hirschberg (DE)**
• **GRABOWSKI, Sven**
**D-67061 Ludwigshafen (DE)**
• **BUS, Klaus**
**D-67655 Kaiserslautern (DE)**

• **Die andere Erfinder haben auf ihre Nennung verzichtet**

(56) Entgegenhaltungen:
EP-A- 0 534 235          EP-A- 0 665 095
EP-A- 0 683 028          DE-A- 4 446 129
US-A- 4 110 843          US-A- 4 802 769

• **DATABASE WPI Week 9221 Derwent Publications Ltd., London, GB; AN 92-169472 XP002053233 & JP 04 008 754 A (DENKI KAGAKU KOGYO KK) , 13.Januar 1992 in der Anmeldung erwähnt**
• **PATENT ABSTRACTS OF JAPAN vol. 17, no. 142 (C-1038), 23.März 1993 & JP 04 311704 A (ASAHI CHEM IND CO LTD), 4.November 1992,**
• **PATENT ABSTRACTS OF JAPAN vol. 13, no. 500 (M-891), 10.November 1989 & JP 01 202406 A (TOSHIBA MACH CO LTD), 15.August 1989, in der Anmeldung erwähnt**
• **PATENT ABSTRACTS OF JAPAN vol. 15, no. 53 (M-1079), 7.Februar 1991 & JP 02 286208 A (TOSHIBA MACH CO LTD), 26.November 1990, in der Anmeldung erwähnt**
• **PATENT ABSTRACTS OF JAPAN vol. 9, no. 78 (C-274), 6.April 1985 & JP 59 210967 A (TOSHIBA KIKAI KK), 29.November 1984,**

**Beschreibung**

Die vorliegende Erfindung betrifft ein neues Verfahren gemäß Anspruch 1 zur Herstellung von schlagzäh modifizierten Thermoplasten oder schlagzäh modifizierte Thermoplaste enthaltende Polymerblends, wobei die Thermoplasten bzw. die Polymerblends

A) 5 bis 95 Gew.-% mindestens einer wasserfeuchten, bis zu 60 Gew.-% Restwasser enthaltenden Elastomerkomponente A,

B) 5 bis 95 Gew.-% mindestens eines thermoplastischen Polymeren B,

C) 0 bis 95 Gew.-% mindestens eines weiteren Polymeren C, und

D) 0 bis 70 Gew.-% Zusatzstoffe D

enthalten,
durch Vermischen der Elastomerkomponente A mit dem thermoplastischen Polymeren B sowie, sofern vorhanden, den weiteren Polymeren C und, sofern vorhanden, den Zusatzstoffen D in einer Schneckenmaschine unter mechanischer Entwässerung der Elastomerkomponente A.

Schließlich betrifft die Erfindung einen Extruder zur Herstellung der Thermoplasten.

Als Elastomerkomponenten für die Schlagzähmodifizierung von thermoplastischen oder anderen Kunststoffen werden häufig partikelförmige Kautschuke verwendet, die gepfropft oder ungepfropft sein können. Solche Kautschuke werden üblicherweise in wäßrigen Systemen hergestellt, beispielsweise durch Emulsions- oder Suspensionspolymerisation. Die bei der Suspensionspolymerisation entstandenen bzw. bei der Emulsionspolymerisation (beispielsweise durch Zugabe eines koagulierenden Fällmittels) ausgefällten Partikel werden in der Regel mit Wasser gewaschen und durch ein geeignetes Entwässerungsverfahren wie Sieben, Auspressen, Filtrieren, Dekantieren, Sedimentieren, Zentrifugieren oder eine teilweise thermische Trocknung, z.B. mittels eines Stromtrockners entwässert. Auch eine partielle Entwässerung durch Sprühtrocknung ist möglich. Man erhält in jedem Falle teilentwässerte Produkte.

Häufig verwendete Pfropfkautschuke sind beispielsweise mit einem Styrol-Acrylnitril-Copolymeren (SAN) gepfropftes Polybutadien und mit einem solchen Copolymeren gepfropftes Poly-n-butylacrylat, oder aus mehreren Pfropfstufen aufgebaute Kautschuke auf Basis von Butadien, Styrol, n-Butylacrylat, Ethylhexylacrylat, Methylmethacrylat und/oder Acrylnitril.

Der Restwassergehalt des nach der Teilentwässerung erhaltenen Kautschuks beträgt bis zu 60 Gew.-% und wird üblicherweise durch energieaufwendiges Trocknen entfernt. Der als Pulver anfallende, getrocknete Kautschuk wird schließlich in den als Pulver oder Granulat vorliegenden Thermoplasten unter Aufschmelzen eingearbeitet, wobei das Endprodukt entsteht. Auch sind Verfahren bekannt, in denen Kautschuk- und Matrixpolymere gemeinsam gefällt und getrocknet werden. Das Kautschukpulver neigt während des Trocknens und der Einarbeitung in den Thermoplasten wegen des Feinstaubanteils zur Selbstentzündung.

Nach einem in DE-A-20 37 784 beschriebenen Vorschlag kann man teilentwässerten Pfropfkautschuk unter Überdruck in eine SAN-Schmelze einmischen und unter Verdampfen des Wassers einen diesen Pfropfkautschuk enthaltenden Thermoplasten erhalten. Dieses Verfahren erfordert einen relativ hohen Aufwand an elektrischer Energie.

Die EP-A 534 235 lehrt ein Verfahren zur Herstellung von schlagzäh modifizierten Thermoplasten durch Einarbeitung von mechanisch teilweise entwässertem Kautschuk in einen Thermoplasten oberhalb des Erweichungspunktes des Thermoplasten, wobei die Einarbeitung in einem Hauptextruder geschieht und die Teilentwässerung des Kautschuks in einem seitlich am Hauptextruder angebrachten sog. Seitenextruder vorgenommen wird. Das im Kautschuk verbliebene Restwasser wird während der Einarbeitung durch vor und nach der Einmischstelle befindliche Entgasungsöffnungen als Dampf entfernt. Nachteilig an diesem Verfahren ist die Notwendigkeit, zur Herstellung des schlagzähen Thermoplasten zwei Extruder betreiben zu müssen.

Das DE-Gebrauchsmuster DE-U 94 21 779 offenbart einen Extruder zum Aufbereiten von feuchtem Material, bei dem gewaschene Kunststoffabfälle mittels einer Stopfvorrichtung (Stopfschnecke) in den Extruder gepresst werden. Das den Kunststoffschnitzeln anhaftende Wasser wird durch eine Öffnung im Extruder, welche mit einer Schnecke zum Zurückhalten des Kunststoffs versehen ist, entfernt.

Die US-Patentschrift 5 151 026 beschreibt einen Extruder, in dem zerkleinerte und gewaschene Kunststoffabfälle, deren Wasseranteil bis zu 50 Gew.-% beträgt, entwässert werden. Zu diesem Zweck befinden sich in der Extruderschnecke, die ansonsten wie üblich ein Rechtsgewinde aufweist, kurze Abschnitte mit einem Linksgewinde. Im Bereich der Linksgewinde-Abschnitte oder unmittelbar vor den Linksgewinden befindet sich eine Entwässerungsöffnung. Der Extruderinhalt steht in diesem Bereich unter hohem Druck (Druckmaximum) bedingt durch die stauende Wirkung der Linksgewinde, weshalb die Entwässerungsöffnung mit einem Extruder verschlossen werden muß, der ein Austreten des Polymeren verhindert. Diese technisch aufwendige Abdichtung ist nachteilig. Die aus dieser US-Schrift hervorgegangene Teilanmeldung US 5 232 649 beschreibt das entsprechende Verfahren.

In der EP-A 233 371 ist ein Verfahren zur Herstellung eines Thermoplastharzes offenbart, bei dem der Latex eines Pfropfkautschuks, ein wasserlösliches Fällmittel und ein organisches Lösungsmittel zu einer zweiphasigen Mischung vermischt werden, und die wäßrige Phase abgetrennt wird. Die organische Phase wird in einem Extruder entgast, mit der eindosierten Schmelze eines Styrol-Acrylnitril-Copolymeren vermischt, nochmals entgast und das Produkt ausgetragen. Nachteilig an diesen aufwendigen Verfahren ist, daß große Mengen Wasser zunächst eingesetzt und dann wieder entfernt werden müssen, daß teure und schnell verdampfende organische Lösungsmittel gehandhabt werden müssen und daß bei einer Entgasung vor der Zugabe der SAN-Schmelze vermehrt Pfropfkautschukpartikel mit dem ausströmenden Gas mitgerissen werden.

In der Schrift JP 01 123 853 ist ein Verfahren offenbart, bei dem der Latex eines Pfropfkautschuks, ein wasserlösliches Fällmittel und eine organische Chemikalie auf einen Kneter vermischt werden, wobei der Latex koaguliert wird. Der koagulierte Latex wird im Kneter abgetrennt und in einem Extruder weiter entwässert und entgast. Das Verfahren hat die Nachteile, daß große Flüssigkeitsmengen gehandhabt werden müssen, wodurch der Durchsatz (Produktmenge pro Zeiteinheit) nur gering ist, daß die Latexkoagulation ein Teil des Verfahrens ist und in einem technisch aufwendigen Kneter (statt z.B. in einem einfachen gerührten Behälter) erfolgt, und daß die Fällmittel-Lösung im Kneter Korrosion verursachen kann.

Die Schrift JP 22 86 208 lehrt einen Zweischneckenextruder für die Entwässerung thermoplastischer Formmassen, dessen Rechtsgewinde-Schnecken jeweils zwei Linksgewinde-Abschnitte aufweisen. Das Wasser tritt flüssig durch sog. Seihergehäuse - siebartige Einsätze im Extrudergehäuse - und als Dampf durch Entgasungsöffnungen aus. Die Seihergehäuse neigen allerdings zu Verstopfungen durch austretendes Polymermaterial, wie es beispielsweise in der DE 15 79 106 für die Entwässerung von Synthesekautschuk beschrieben ist. Dadurch ist die Herstellung der Formmassen anfällig für Störungen. Um Seihergehäuse, die mit austretendem Polymermaterial verstopft sind, zu reinigen, muß der Extruder abgeschaltet werden, wonach die Seihergehäuse demontiert, gereinigt und wieder montiert werden müssen. Durch diese Standzeiten sind Verfahren mit Seihergehäusen unökonomisch (kurze Betriebszeiten).

Die Schrift JP-A 1/202 406 beschreibt ebenfalls ein Verfahren, in dem feuchte kautschukartige Polymere auf einem Extruder in einem mit Seihergehäusen versehenen Bereich zunächst teilentwässert werden und dann das restliche Wasser in einer atmosphärischen und drei sich daran anschließenden Vakuum-Entgasungszonen entfernt wird. Dieses Verfahren beinhaltet neben den nachteiligen, anfälligen Seihergehäusen noch einen aufwendigen Vakuum-Entgasungsbereich.

Die Schrift JP-A 57 16 7303 lehrt ein Verfahren, bei dem Polymerpartikel aus ihrer wäßrigen Suspension ("Slurry") durch Filtration abgetrennt und in einem Extruder weiter entwässert werden, wobei das Wasser durch Seihergehäuse austritt. Danach wird der Extruderinhalt aufgeheizt, unter Druck aufgeschmolzen, zweifach entgast, mit Additiven vermischt und ausgetragen. Hauptnachteil dieses Verfahrens ist die Verwendung der leicht verstopfenden Seihergehäuse im Extruder, woraus kurze Betriebszeiten resultieren.

In der Schrift JP 4008 754 ist ein Verfahren zur Herstellung eines thermoplastischen Harzes beschrieben, bei dem der Latex eines Dien-Pfropfkautschuks auf einem Zweischnecken-Extruder entwässert wird, wobei das Wasser durch Seihergehäuse austritt. Danach wird der Extruderinhalt entgast und aufgeschmolzen, wonach eine Schmelze eines Vinylpolymerisates dem Extruder zugeführt wird. Auch dieses Verfahren erfordert die Verwendung der problematischen Seihergehäuse.

Die US-Patentschrift 4 802 769 beschreibt einen Extruder, in dem eine Slurry eines Kautschuk-Polymeren, sowie ein Styrol-Acrylnitril-Copolymer zu einem Thermoplasten verarbeitet werden. Dabei tritt das Wasser durch Seihergehäuse flüssig und durch eine dreistufige Entgasung als Dampf aus. Als Nachteile sind - neben den verstopfenden Seihergehäusen - zu nennen, daß der mit Seihergehäusen versehene Extruderteil beheizt ist, und daß im Entgasungsteil ein mehrfacher Druckaufbau durch Stauelemente erfolgt, wodurch das Polymermaterial thermisch und mechanisch stark beansprucht wird.

Der Erfindung lag die Aufgabe zugrunde, ein Verfahren bereitzustellen, welches die geschilderten Nachteile nicht aufweist. Insbesondere sollte ein Verfahren geschaffen werden, das die Herstellung eines schlagzähen Thermoplasten aus mindestens einer wasserfeuchten Elastomerkomponente und einem oder mehreren thermoplastischen, spröden Polymeren auf technisch einfache Weise, möglichst in einem Verfahrensschritt, ermöglicht.

Eine weitere Aufgabe bestand in der Bereitstellung eines Verfahrens, mit dem sich durch Abmischen des Thermoplasten mit weiteren Polymeren in einem Verfahrensschritt Polymerblends herstellen lassen. Insbesondere sollte ein Verfahren bereitgestellt werden, daß aufgrund seiner Flexibilität das Abmischen sowohl verschiedenster Polymerer miteinander, als auch das Abmischen unterschiedlichster Mengenverhältnisse thermoplastisches Polymer/ Elastomerkomponente (ergebend sehr kautschukarme bis sehr kautschukreiche schlagzähe Thermoplasten) ermöglicht und zugleich betriebssicher ist.

Ferner sollte es das Verfahren ermöglichen, ohne zusätzliche Verfahrensschritte den Thermoplasten bzw. den Polymerblend mit üblichen Zusatzstoffen (etwa Stabilisatoren, Farbstoffe, Füllstoffe, etc.) abzumischen, wobei die Zusatzstoffe auch in Form sogenannter Masterbatches zugefügt werden können.

Weiterhin soll das Verfahren das Polymermaterial thermisch und mechanisch möglichst gering beanspruchen.

Schließlich soll das Verfahren eine hohen Durchsatz aufweisen und eine längere Betriebszeit ohne Störungen gewährleisten. Insbesondere soll gewährleistet sein, daß das Restwasser auch über eine längere Betriebszeit des Verfahrens störungsfrei entfernt werden kann.

Demgemäß wurde das im Anspruch 1 definierte Verfahren gefunden, wobei man die Komponenten A, B, C und D einem Extruder mit mindestens zwei gleichsinnig oder gegensinnig rotierenden Schnecken eines Schneckendurchmessers $D_{Schnecke}$ zuführt, wobei der Extruder in Förderrichtung (stromabwärts) im wesentlichen aus

- mindestens einem Dosierabschnitt, in den mittels einer Dosiereinrichtung Elastomerkomponente A dem Extruder zugeführt wird,

- mindestens einem der Entwässerung der Elastomerkomponente A dienenden Abquetschabschnitt, der mindestens ein Stauelement, sowie jeweils mindestens eine zugehörige Entwässerungsöffnung, die sich in einem Abstand von mindestens einem Schneckendurchmesser Dschnecke vor dem (ersten) Stauelement stromaufwärts befindet, enthält,

- mindestens einem Zufuhrabschnitt, in dem das thermoplastische Polymere B als Schmelze in den Extruder eingeführt wird,

- mindestens einem mit Durchmischungs- und/oder Knetelementen versehenen Plastifizierungsabschnitt,

- mindestens einem mit mindestens einer Entgasungsöffnung versehenen Entgasungsabschnitt, in dem das restliche Wasser als Dampf entfernt wird, und

- einer Austragszone

aufgebaut ist,

wobei das aus den Entwässerungsöffnungen austretende Wasser teilweise oder vollständig in flüssiger Phase vorliegt, und

wobei die Komponenten C und/oder D gemeinsam oder getrennt voneinander entweder mit der Komponente A und/oder B zusammen oder getrennt von A und B einem oder mehreren der genannten Extruderabschnitte zugeführt werden.

Außerdem wurden die nach den Verfahren hergestellten thermoplastischen Formmassen sowie die Verwendung dieser Formmassen zur Herstellung von Folien, Fasern und Formkörpern gefunden. Schließlich wurde ein Extruder zur Herstellung der Thermoplasten gefunden.

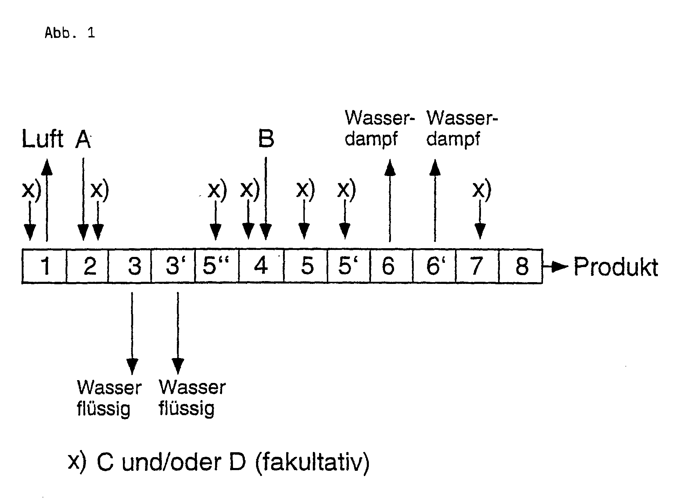

Nachfolgend seien das Verfahrensprinzip und die bevorzugten Ausführungsformen des Verfahrens beschrieben, wobei die als Abschnitte bzw. Zonen bezeichneten Bestandteile des Extruders nicht notwendigerweise identisch sind mit den einzelnen Bauteilen wie Gehäuseteilen, Schneckensegmenten, aus denen der Extruder montiert ist. Ein Abschnitt bzw. eine Zone besteht in der Regel aus mehreren Bauteilen. Die bei den Abschnitten bzw. Zonen genannten Ziffern beziehen sich auf Fig. 1, welche eine der möglichen Ausführungsformen des Extruders schematisch darstellt.

In einer bevorzugten Ausführungsform ist der Extruder ein Zweischneckenextruder. Jedoch kann auch ein Extruder mit 3 oder mehr Schnecken, oder auch ein Extruder mit einer Hauptschnecke großen Durchmessers und darum herum angeordneten kleinen Schnecken (Planeten-Anordnung) verwendet werden.

Weiterhin rotieren die Schnecken des Extruders bevorzugt gleichsinnig. Jedoch ist auch die gegensinnige Rotation möglich. Besonders bevorzugt wird ein Zweischneckenextruder mit gleichsinnig rotierenden Schnecken eingesetzt.

Die wasserfeuchte, bis zu 60 Gew.-% Restwasser enthaltende Elastomerkomponente A ist in der Regel ein feuchter Feststoff. Es handelt sich beispielsweise um einen Pfropfkautschuk, der durch Emulsionspolymerisation gewonnen, ausgefällt und auf bis zu 60 Gew.-% Restwassergehalt teilentwässert wurde, wobei die Teilentwässerung z. B. durch Filtrieren, Sedimentieren, Auspressen, Dekantieren, Zentrifugieren oder thermische Trocknung erfolgen kann. Die restwasserhaltige Elastomerkomponente A wird dem Dosierabschnitt 2 des Extruders zugeführt. Der Dosierabschnitt besteht üblicherweise aus einer automatisch arbeitenden Dosiereinrichtung, und der eigentlichen Dosieröffnung (oder auch mehreren Dosieröffnungen). Die Dosiereinrichtung ist beispielsweise als Förderschnecke ausgebildet, die das Fördergut in die Dosieröffnung fördert oder drückt. Ebenso ist denkbar, daß die Komponente A durch geeignete gravimetrische oder volumetrische Dosiereinrichtungen dosiert und im freien Fall in die Einzugsöffnung des Extruders dosiert wird. Mittels einer geeigneten Schnekkengeometrie im Dosierabschnitt wird erreicht, daß die Komponente A eingezogen und entlüftet wird.

Im Falle mehrerer Elastomerkomponenten A können diese gemeinsam oder getrennt voneinander in die gleiche Dosieröffnung oder in verschiedene Dosieröffnungen des Dosierabschnittes 2 dosiert werden.

In einer möglichen Ausführungsform befindet sich ein Entlüftungsabschnitt 1 stromaufwärts entgegen der Förderrichtung des Extruders. Er weist typischerweise eine oder mehrere Entlüftungsöffnungen auf, durch die in der Elostomerkomponente eingeschlossene Luft entweichen kann.

In einer weiteren Ausführungsform wird in die Entlüftungsöffnung oder in eine oder mehrere weitere, am Entlüftungsabschnitt angeordnete Öffnungen, die Komponente C und/oder die Komponente D, bzw. Anteile der insgesamt zugegebenen Menge der Komponenten C und/oder D, eindosiert. Werden beide Komponenten C und D zugeführt, so kann dies gemeinsam durch eine Öffnung oder durch verschiedene Öffnungen (je eine für C bzw. D) geschehen.

In einer anderen, bevorzugten Ausführungsform wird in die Dosieröffnung des Dosierabschnittes oder in eine oder mehrere weitere, am Dosierabschnitt angeordnete Öffnungen, die Komponente C und/ oder die Komponente D, bzw. Anteile der insgesamt zugegebenen Menge der Komponenten C und/oder D, eindosiert. Dies kann auch in einem weiteren Dosierabschnitt 2' erfolgen, der dem ersten Dosierabschnitt 2 nachfolgt und für den im wesentlichen die zum Abschnitt 2 gemachten Ausführungen gelten.

Die Komponenten C und D können in den Dosierabschnitten getrennt von A oder zusammen mit A in einer der folgenden Kombinationen dem Extruder zugeführt werden: A+C+D, A/C+D, A+C/D, A+D/C, A/C/D (wobei / "getrennt von" mittels je einer separaten Öffnung und + "zusammen mit" durch eine gemeinsame Öffnung bedeutet).

Die Dosiereinrichtung für die Komponenten C und/oder D kann in beiden genannten Ausführungsformen je nach Aggregatzustand von C und D beispielsweise eine Förderschnecke wie bei der Dosierung der Elastomerkomponente A, eine Pumpe oder auch ein Extruder sein.

Im Bereich der Dosierabschnitte und - sofern vorhanden - im Entlüftungsabschnitt sind die Extruderschnecken in der Regel als übliche Förderschnecken ausgebildet. Übliche Förderschnecken im Sinne dieser Anmeldung sind beispielsweise Elemente mit "Erdmenger"-Profil (vollständig selbstreinigend), Schubkantenelemente, Elemente mit Trapezprofil und Elemente mit Rechteckprofil, Schneckenelemente mit Fördergewinden großer Steigung (Steigung größer ein Schneckendurchmesser) in Förderrichtung (sog. RGS-Elemente), oder Kombinationen dieser Elemente, wobei die Schnecken auch abweichend von der Gangzahl des Abquetschteils mit geringerer oder höherer Gangzahl ausgestattet sein können. Hier können auch zwei- und eingängige Schneckenelemente gemeinsam zur Anwendung kommen. Die Schneckenelemente der Förderschnecke können in den genannten Abschnitten gleich oder verschieden sein, sie können ferner gleiche oder unterschiedliche Steigungen aufweisen

Die wasserfeuchte Elastomerkomponente wird stromabwärts in den ersten Abquetschabschnitt gefördert.

Im ersten Abquetschabschnitt 3 wird ein Teil des in der Elastomerkomponente enthaltenen Restwassers mechanisch entfernt ("Abquetschen"). Das Material wird gegen ein als Hindernis wirkendes Stauelement gefördert, welches sich in der Regel am Ende des Abquetschabschnitts befindet. Dadurch wird ein Druck aufgebaut, der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente geeignet.

Beispielsweise seien als mögliche Stauelemente

- überschobene, fördernde Schneckenelemente
- Schneckenelemente mit Steigung entgegen der Förderrichtung, wozu auch Schneckenelemente mit Fördergewinden großer Steigung (Steigung größer ein Schneckendurchmesser) entgegen der Förderrichtung (sog. LGS-Elemente) zählen
- Knetblöcke mit nichtfördernden Knetscheiben in unterschiedlicher Breite
- Knetblöcke mit rückfördernder Steigung
- Knetblöcke mit fördernder Steigung
- Zylinderscheiben, Exzenterscheiben und daraus konfigurierte Blöcke
- Zahnmischelemente (sog. ZME) verschiedenster Bauart
- neutrale Stauscheiben ("Drosselscheiben")
- mechanisch verstellbare Drosseln (Schiebegehäuse, Radialdrosseln, Zentraldrosseln)

genannt.

Es können auch zwei oder mehrere der Stauelemente miteinander kombiniert werden. Gleichfalls kann die Stauwirkung der Stauzone durch die Länge und die Intensität der einzelnen Stauelemente dem jeweiligen Elastomeren angepaßt werden.

Im Abquetschabschnitt sind die Schneckenelemente, die sich vor der Stauzone (vor dem ersten Stauelement) befinden, in der Regel als übliche Förderschnecken ausgebildet. In einer Ausführungsform werden hier Förderschnekken verwendet, deren Steigungswinkel in Richtung auf die Stauzone flacher wird. Diese Ausgestaltung bewirkt einen vergleichsweise langsamen Druckaufbau - man spricht von einer Kompressionszone -, wie er zur Entwässerung bestimmter Elastomerkomponenten vorteilhaft sein kann.

In einer anderen bevorzugten Ausführungsform erfolgt der Druckaufbau ohne vorherige Kompressionszone (d.h. die Förderschnecke im Abquetschabschnitt hat in der Regel eine konstante Steigung), also unmittelbar vor bzw. in der Stauzone.

In einer anderen bevorzugten Ausführungsform werden im Abquetschabschnitt zwischen der Entwässerungsöffnung und dem ersten Stauelement Durchmischungselemente und/oder Knetelemente, wie sie weiter unten für den Plastifizierungsabschnitt 5 beispielhaft genannt werden, eingesetzt. Diese Ausführungsform kann insbesondere für bestimmte Konsistenzen und Morphologien der Elastomerkomponente vorteilhaft sein.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Bevorzugt enthält der Abquetschabschnitt 3 des Extruders zum Druckaufbau Schneckenelemente mit einer Steigung entgegen der Förderrichtung und/oder entsprechende Knetblöcke.

Das im ersten Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren Entwässerungsöffnungen versehen. Die Entwässerungsöffnungen befinden sich bevorzugt an der Oberseite des Extruders, jedoch sind auch seitliche oder nach unten weisende Anordnungen möglich. Weiterhin sind die Entwässerungsöffnungen bevorzugt mit einer Vorrichtung versehen, die das Austreten des geförderten Elastomeren A verhindern. Besonders bevorzugt werden dazu sog. Rückhalteschnecken verwendet.

Die Entwässerungsöffnungen sind in an sich bekannter Weise ausgestaltet und entsprechen in ihrer Geometrie weitgehend den bekannten Entgasungsöffnungen, wie sie zum Entfernen gasförmiger Stoffe aus einem Extruder verwendet werden. Es werden Entwässerungsöffnungen verwendet, deren Form und Dimensionierung so gewählt ist, daß die Öffnungen durch den Extruderinhalt nicht verstopft werden können. Besonders bevorzugt werden als Entwässerungsöffnungen Aussparungen und/oder Bohrungen im Extruderzylinder (Extrudergehäuse) verwendet. Als Entwässerungsöffnungen sind beispielsweise kreisförmige Bohrungen oder Bohrungen in Form einer liegenden Acht (also zwei direkt nebeneinanderliegende, kreisförmige Bohrungen) geeignet, wobei die Längsachse der liegenden Acht beispielsweise rechtswinklig (quer) oder parallel (längs) zur Förderrichtung des Extruders angeordnet sein kann. Außerdem kann die Endwässerungsöffnung mittig auf der Längsachse des Extruders positioniert sein (also symmetrisch), oder seitlich versetzt zur Extruder-Längsachse (also asymmetrisch).

In dem Extruder werden als Entwässerungsöffnungen keine Seihergehäuse oder ähnliche, schnell verstopfende Bauteile wie etwa Siebe, verwendet. Seihergehäuse sind nämlich, wie bereits beschrieben, anfällig für Verstopfungen.

Die zu den Stauelementen zugehörige Entwässerungsöffnung befindet sich erfindungsgemäß in einem Abstand von mindestens einem Schneckendurchmesser $D_{Schnecke}$, bevorzugt in einem Bereich von 1 bis 4 $D_{Schnecke}$, und ganz besonders bevorzugt 1 bis 3,5 $D_{Schnecke}$, vor dem Stauelement, bzw. im Falle mehrerer Stauelemente, vor dem ersten Stauelement stromaufwärts. Unter "Abstand" soll dabei die Strecke zwischen der Mitte der Entwässerungsöffnung und dem Beginn des ersten Stauelementes verstanden werden.

Durch diesen Abstand von Stauelementen und Entwässerungsöffnung wird erreicht, daß die Entwässerungsöffnung nicht in dem Bereich des Extruders liegt, in dem der Druck des gegen die Stauelemente geförderten Polymeren sehr hoch ist (Druckmaximum). Daher reichen technisch einfache Vorrichtungen wie Rückhalteschnecken zum Abdichten der Öffnungen gegen austretendes Polymeres aus.

Die Temperatur des austretenden Wassers beträgt im allgemeinen 20 bis 95°C und bevorzugt 25 bis 70°C, gemessen an der Austrittsöffnung.

Im ersten Abquetschabschnitt werden, abhängig von der Elastomerkomponente und dem anfangs vorhandenen Restwassergehalt, üblicherweise 10 bis 90, bevorzugt 20 bis 80 Gew.-% des anfänglich enthaltenen Restwassers entfernt.

Zur Verbesserung der Entwässerungsleistung des ersten Abquetschabschnittes kann es vorteilhaft sein, bereits im Dosierabschnitt, oder zwischen Dosierabschnitt und der ersten Entwässerungsöffnung, Stauelemente und/oder Knetelemente zu verwenden. Diese Stau- bzw. Knetelemente werden nach Art und Anzahl derart ausgewählt, daß sie die Elastomerkomponente in gewisser Weise mechanisch beanspruchen und derart in ihrer Beschaffenheit verändern, daß ihre Entwässerbarkeit verbessert wird, sie jedoch nicht oder nur in untergeordnetem Ausmaß plastifizieren oder anschmelzen, jedenfalls nicht aufschmelzen.

In einer bevorzugten Ausführungsform wird der Extruder in den Dosierabschnitten für die Elastomerkomponente A und in den Abquetschabschnitten nicht beheizt. In einer Ausführungsform wird der Extruder in diesen genannten Abschnitten gekühlt.

Die partiell entwässerte Elastomerkomponente A wird über die Stauzonen hinweggefördert und gelangt in den nächsten Extruderabschnitt.

In einer für die Herstellung mancher schlagzäher Thermoplasten bevorzugten Ausführungsform folgt auf den soeben beschriebenen ersten Abquetschabschnitt 3 ein zweiter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3.

Im fakultativen zweiten Abquetschabschnitt wird die Elastomerkomponente weiter entwässert, wobei nochmals bis zu 80, bevorzugt bis zu 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Bevorzugt wird das Verfahren derart ausgestaltet, daß der Extruderinhalt möglichst niedrigen Temperaturen ausgesetzt ist. Bevorzugt wird daher der Extruder derart ausgestaltet und betrieben, daß die Temperatur der Elastomerkomponente 200°C, besonders bevorzugt 180°C nicht überschreitet. Die genannten Temperaturen beziehen sich auf die Stauzonen.

Das im zweiten Abquetschabschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, daß der Anteil des flüssig austretenden Wassers trotz der hohen Materialtemperatur 70 Gew.-% oder mehr beträgt. Hierzu werden die Geometrien der Extruderschnecken und der Rückhalteschnecken derart gestaltet, daß, beispielsweise durch Druckaufbau im Austrittsbereich oder durch andere Maßnahmen, das Wasser überwiegend flüssig bleibt.

In der Regel liegt die Temperatur des den Extruder verlassenden Wassers bei 40 bis 130, bevorzugt bei 50 bis 99°C.

Die teilentwässerte Elastomerkomponente kann am Ende des zweiten Abquetschabschnittes 3' bereits in größerem Umfange angeschmolzen oder aufgeschmolzen sein und in Form größerer zusammengeschmolzener Agglomerate vorliegen.

Der Extruder kann hinter dem zweiten Abquetschabschnitt 3' weitere Abquetschabschnitte enthalten, insbesondere dann, wenn der anfängliche Restwassergehalt der Elastomerkomponente A hoch ist.

Das ausgepresste Wasser verlässt den Extruder in der Regel durch alle angebrachten Entwässerungsöffnungen. Je nach den Eigenschaften der Elastomerkomponente, der eindosierten Menge (Füllgrad des Extruders) und ihrem Restwassergehalt ist es jedoch auch möglich, daß das abgequetschte Wasser nicht an allen der verfügbaren Entwässerungsöffnungen austritt, und die anderen Entwässerungsöffnungen "trocken" sind, also kein oder nahezu kein Wasser ausleiten. Dies hat sich in keiner Weise als nachteilig erwiesen.

Das in den Abquetschabschnitten entfernte Wasser kann einschließlich etwaiger mitgeschleppter Elastomerpartikel in einer bevorzugten Ausführungsform gesammelt und beispielsweise bei der Herstellung der Komponenten A, B, C und/oder D verwendet werden. So kann das ausgepresste Wasser etwa im Herstellungsprozeß der Elastomerkomponente A, oder bei der Ausfällung des Kautschuks aus seinem Latex, wiederverwendet werden. Durch diese Kreisfahrweise des Wassers verbessert sich die Wirtschaftlichkeit und die Umweltfreundlichkeit des Verfahrens, da weniger Abwasser anfällt.

Nach Passieren des letzten Abquetschabschnittes ist die Elastomerkomponente von einem erheblichen Teil des Restwassers befreit (Komponente A') und gelangt in einen Zufuhrabschnitt 4, in dem sich eine oder mehrere Zufuhröffnungen für das thermoplastische Polymere B befinden. Vorteilhaft ist, daß das Polymere B in Form seiner Schmelze zugeführt wird. Enthält der Zufuhrabschnitt mehrere Zufuhröffnungen, so können diese z.B. hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann mittels eines Extruders oder mittels Fördereinrichtungen wie Schmelzepumpen oder Dosierschnecken erfolgen.

Im beschriebenen Zufuhrabschnitt 4 können außer der Schmelze des thermoplastischen Polymeren B auch die Komponente C und/oder die Komponente D, bzw. Anteile der insgesamt zugegebenen Menge der Komponenten C und/oder D, in den Extruder eingeführt werden. Dabei können diese Komponenten als Schmelze bzw. Flüssigkeit ) vorliegen und werden in diesem Falle in der Regel mit Dosiereinrichtungen, wie sie auch zur Zufuhr der Schmelze des Polymeren B verwendet werden, oder, falls die Komponente flüssig ist, mit einer Flüssigkeitspumpe, zudosiert. Im Falle fester Komponenten C und/oder D erfolgt die Dosierung üblicherweise wie bei Komponente A beschrieben.

Die Komponenten C und D können getrennt von B oder zusammen mit B in einer der folgenden Kombinationen dem Extruder zugeführt werden: B+C+D, B/C+D, B+C/D, B+D/C, B/C/D (wobei / "getrennt von" mittels je einer separaten Öffnung und + "zusammen mit" durch eine gemeinsame Öffnung bedeutet).

Ebenso kann man die Komponenten C und/oder D, bzw. Anteile der insgesamt zugegebenen Menge der Komponenten C und/oder D, in nicht oder nicht vollständig aufgeschmolzender Form mittels eines zwangsfördernden Dosierorgans dem Extruder in den Abschnitt 4 oder auch in die bereits beschriebenen Abschnitte 1 und 2 zuführen. Ein solches Dosierorgan ist beispielsweise ein Extruder, insbesondere ein Zweischneckenextruder mit kämmenden, gegenläufigen Schnecken.

Die Verwendung einer Schmelzpumpe, eines Extruders (sogenannter "Seitenextruder") oder einer Dosierpumpe als Dosiereinrichtung für die Komponenten C und/oder D ist bevorzugt.

Im Bereich des Zufuhrabschnittes 4, in dem die Schmelze des thermoplastischen Polymeren B sowie gegebenenfalls die Komponenten C und/oder D zugeführt werden, kann die Schnecke beispielsweise als Förderschnecke ausgebildet sein, welche die Mischung aus Elastomerkomponente A und der Schmelze des Thermoplasten B sowie gegebenenfalls den Bestandteilen C und/oder D nur in geringem Ausmaß zu homogenisieren vermag. Zur Ausgestaltung der Förderschnecke gilt das für den Dosierabschnitt Gesagte.

In einer bevorzugten Ausführungsform weist der Extruder zusätzlich zum Abschnitt 4, der sich zwischen dem (letzten) Abquetschabschnitt und dem (ersten) Plastifizierungsabschnitt 5 (siehe nachfolgend) befindet, an anderer Stelle weitere Abschnitte 4', 4'', etc. auf, in dem ebenfalls eine Schmelze des thermoplastischen Polymeren B zugeführt wird. Insbesondere befinden sich diese weiteren Zufuhrabschnitte 4', 4'', etc. stromabwärts im Bereich hinter dem Zufuhrabschnitt 4 und vor dem Ende des Extruders.

Die Zufuhr der Schmelze von B über mehrere Zufuhrabschnitte 4, 4', 4'', etc. kann insbesondere dann vorteilhaft sein, wenn spezielle Produktzusammensetzungen gewünscht sind. In einer bevorzugten Ausführungsform befinden sich weitere Zufuhrabschnitte 4', 4'' etc. für die Schmelze des thermoplastischen Polymeren B stromabwärts zwischen Plastifizierungs- und Entgasungsabschnitt, zwischen zwei Entgasungsabschnitten, zwischen dem letzten Entgasungsabschnitt und der Austragszone, oder in der Austragszone. Von diesen Ausführungsformen sind die beiden letztgenannten bevorzugt.

Falls die Schmelze von B über mehrere Zufuhrabschnitte 4, 4', 4'' etc. dem Extruder zugeführt wird, kann die Verteilung der Gesamtmenge von B auf die verschiedenen Abschnitte 4, 4', 4'' etc. in weiten Grenzen variieren. Im Falle zweier Zufuhrabschnitte 4 und 4' kann das Massenverhältnis [Schmelze von B in Abschnitt 4 / Schmelze von B in Abschnitt 4'] zwischen 9,5 : 0,5 und 0,5 : 9,5 liegen, bevorzugt zwischen 9 : 1 und 1 : 9, besonders bevorzugt zwischen 8,5 : 1,5 und 1,5 : 8,5. Indem die Gesamtmenge von B auf die einzelnen Abschnitte 4, 4', 4'' etc. verteilt wird, können die Eigenschaften des Verfahrensproduktes in gewissem Umfang beeinflußt werden.

An den die Thermoplastschmelze B sowie gegebenenfalls die Bestandteile C und/oder D zuführenden Abschnitt schließt sich ein Plastifizierungsabschnitt 5 an, der mit Durchmischungs- und/oder Knetelementen versehen ist.

Die Durchmischungs- und/oder Knetelemente homogenisieren die Polymerenmischung unter gleichzeitigem Aufschmelzen der entwässerten Elastomerkomponente A' sowie ggf. der Komponenten C und/ oder D.

Als Durchmischungs- und Knetelemente kommen die dem Fachmann geläufigen Bauteile in Betracht, beispielsweise

- Schneckenelemente mit geringer Steigung in Förderrichtung,
- Knetblöcke mit schmalen oder breiten, fördernden oder nichtfördernden Knetscheiben,
- Schneckenelemente mit einer Steigung entgegen der Förderrichtung,
- Zylinderscheiben, Exzenterscheiben und Blöcke, welche diese Scheiben enthalten,
- Zahnmischelemente (ZME) oder
- Schmelzmischelemente (SME)

oder eine Kombination solcher Elemente. Es können auch die für die Stauelemente beispielhaft genannten Schneckenelemente verwendet werden, da im allgemeinen jedes Stauelement auch durchmischend wirkt. Bevorzugt werden zur Plastifizierung als Durchmischungs- und Knetelemente verschiedene Kombinationen von Knetblöcken eingesetzt. Auch Drosselscheiben können vorteilhaft verwendet werden. Alle genannten Elemente können als Normalausführung entsprechend dem Durchmesser des Extrudergehäuses, oder auch als spezielle Ausführung mit verringertem Durchmesser, Anwendung finden.

Weiterhin können alle genannten Elemente auch in anderer Weise, z.B. zur Erzielung einer schonenden Verarbeitung des Extruderinhalts oder einer intensiveren Durchmischung, modifiziert sein. Beispielsweise können Fördergewinde und/oder Knetblöcke mit durchbrochenen und/oder durchmesserreduzierten Kämmen versehen sein.

Die Auswahl der Schneckenelemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann nach dem beschriebenen Plastifizierungsabschnitt einen oder mehrere weitere Plastifizierungsabschnitte 5' enthalten, beispielsweise wenn die Homogenisierung und das Aufschmelzen der Mischung im ersten Plastifizierungsabschnitt nicht vollständig war. Für den bzw. die weiteren Plastifizierungsabschnitte gelten die Ausführungen zum ersten Plastifizierungsabschnitt entsprechend.

Es ist möglich, mindestens einem der Plastifizierungsabschnitte die Komponente C und/oder die Komponente D, bzw. Anteile der insgesamt zugegebenen Menge der Komponenten C und/oder D, zuzuführen, wobei diese Zufuhr der Komponenten getrennt voneinander durch verschiedene Öffnungen oder zusammen durch eine gemeinsame Öffnung erfolgen kann.

In einer bevorzugten Ausführungsform wird die Schmelze der thermoplastischen Polymeren B sowie gegebenenfalls die Komponenten C und/oder D dem Extruder am Anfang des Plastifizierungsabschnittes zugeführt. Bei dieser Ausführungsform fällt demnach der Zufuhrabschnitt 4 für die Schmelze des thermoplastischen Polymeren B mit dem Anfang des Plastifizierungsabschnittes 5 zusammen.

In einer weiteren besonderen Ausführungsform wird die Schmelze der thermoplastischen Polymeren B sowie gegebenenfalls die Komponenten C und/oder D dem Extruder an einer oder mehreren Stellen des Plastifizierungsabschnittes zugeführt. Auch bei dieser Ausführungsform fällt demnach der Zufuhrabschnitt 4 mit dem Plastifizierungsabschnitt 5 zusammen.

In einer weiteren besonderen Ausführungsform des Extruders befindet sich ein oder mehrere weitere Plastifizierungsabschnitte vor dem Zufuhrabschnitt 4, in dem die Schmelze des thermoplastischen Polymeren zugeführt wird, also hinter dem letzten Abquetschabschnitt. In diesem Plastifizierungsabschnitt 5" wird die weitestgehend entwässerte Elastomerkomponente A', beispielsweise das Kautschukpulver, zunächst allein homogenisiert und plastifiziert. Die Schmelze des thermoplastischen Polymeren B sowie gegebenenfalls die Komponenten C und/oder D werden demnach bei dieser Ausführungsform in eine viskose "Schmelze" der Elastomerkomponente A' eingebracht. In diesem Fall dient der der Zumischung von Schmelze B sowie C und/oder D (Abschnitt 4) nachfolgende Plastifizierungsabschnitt 5 lediglich der Homogenisierung des Gemisches der bereits im plastischen Zustand vorliegenden Komponenten.

Welche der beschriebenen Varianten der Zufuhr von Schmelze B, und fakultativ den Komponenten C und/oder D, nämlich

- in einen fördernden Abschnitt vor dem Plastifizierungsabschnitt,
- am Anfang des Plastifizierungsabschnittes,
- an einer oder mehreren Stellen im Plastifizierungsabschnitt,
- in einen fördernden Abschnitt zwischen zwei Plastifizierungsabschnitten,

gewählt wird, hängt von den Mengenverhältnissen sowie den physikalischen und chemischen Eigenschaften der zu vermischenden Komponenten A, B, C und D ab. Nur beispielhaft seien die Viskositäten der Schmelzen von Elastomerkomponente A' und thermoplastischem Polymeren B sowie (falls in diesem Teil des Extruders zudosiert) der Komponenten C und/oder D, die Erweichungstemperaturen der Komponenten, ihre thermische Belastbarkeit bzw.

Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B und gegebenenfalls den Bestandteilen C und D, und, im Falle von partikelförmigen Bestandteilen, deren Teilchengröße und Teilchengrößenverteilung genannt.

Dem letzten Plastifizierungsabschnitt folgen ein oder mehrere Entgasungsabschnitte 6 bzw. 6', die jeweils mit einer oder mehreren Entgasungsöffnungen versehen sind. In den Entgasungsabschnitten wird das verbliebene Restwasser, welches in den Abquetschabschnitten noch nicht mechanisch entfernt wurde, teilweise oder vollständig entfernt. Wegen der üblicherweise über $100°C$ liegenden Temperaturen der Polymerschmelze tritt das Wasser zumeist vollständig als Dampf aus. Die zur Verdampfung des Wassers notwendige Energie wurde in der Regel bereits in den Plastifizierungsabschnitten eingebracht. Jedoch ist es auch möglich, die Energie in üblicher Weise durch Beheizung des Extrudergehäuses zuzuführen.

Die Entgasungsöffnungen befinden sich bevorzugt an der Oberseite des Extruders. Jedoch sind auch andere Anordnungen möglich, siehe hierzu die Ausführungen zur Position der Zufuhröffnungen für die Schmelze des thermoplastischen Polymeren B, die sinngemäß auch für die Entgasungsöffnungen gelten. Ebenso bevorzugt können die Entgasungsöffnungen seitlich (einseitig oder beidseitig) angeordnet sein. Besonders bevorzugt ist dabei eine seitliche Anordnung derart, daß alle Flächen der Entgasungsöffnung nach Abwärts gerichtet sind, so daß ausgetragene Polymerbestandteile und kondensierter Wasserdampf nicht wieder in den Extruder zurücklaufen können. Sofern die Eigenschaften des Extruderinhalts es zulassen, können sich die Entgasungsöffnungen auch an der Extruderunterseite befinden. Bevorzugt sind die Entgasungsöffnungen mit einem Stutzen versehen.

Die Entgasungsöffnungen können unter Normaldruck, unter Vakuum oder unter Überdruck betrieben werden, wobei alle Entgasungsöffnungen gleichen oder unterschiedlichen Druck aufweisen können. Im Falle eines Vakuums beträgt der Absolutdruck üblicherweise 100 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck zu betreiben.

Die Anzahl der Entgasungsabschnitte sowie die Zahl, Anordnung und Dimensionierung der Entgasungsöffnungen richtet sich nach dem Wassergehalt des in die Entgasungsabschnitte eintretenden Polymeren und dem gewünschten Wasseranteil im Endprodukt. In einer bevorzugten Ausführungsform wird ein Extruder mit zwei Entgasungsabschnitten verwendet.

Die Entgasungsöffnungen der Entgasungsabschnitte können mit Vorrichtungen, z.B. Rückhalteschnecken, versehen sein, die ein Austreten des geförderten Materials durch die Öffnungen aus dem Extruder verhindern. Bevorzugt werden derartige Vorrichtungen jedoch nicht verwendet.

Nachdem ein Teil des in der Elastomerkomponente A enthaltenen Restwassers bereits in den Abquetschabschnitten 3 und 3' entfernt wurde, werden in allen Entgasungsabschnitten 6 und 6' zusammengenommen etwa 10 bis 80, bevorzugt 20 bis 75 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet, wie sie bereits für die Dosierabschnitte beschrieben wurden. Es kann jedoch sinnvoll sein, im Bereich zwischen den Entgasungsöffnungen Knet- oder Durchmischungselemente in die Schnecken einzubauen, um die bei der Verdampfung des Wassers verbrauchte Energie wieder zuzuführen.

In einer bevorzugten Ausführungsform weist der Extruder zwischen dem letzten Entgasungsabschnitt und der Austragszone 8 einen weiteren Abschnitt 7 auf, in den mittels mindestens einer Dosiereinrichtung die Komponenten C und/oder D (bzw. Anteile der insgesamt zugegebenen Menge der Komponenten C und/oder D), entweder gemeinsam oder getrennt voneinander, dem Extruder zugeführt werden. Der weitere Abschnitt 7 befindet sich demnach unmittelbar vor der Austragszone 8.

Dieser weitere Abschnitt 7 ist mit Durchmischungs- und/oder Knetelementen versehen, wie sie beispielhaft für die Plastifizierungsabschnitte bereits genannt wurden. Diese Elemente homogenisieren die Polymerenmischung. Die zur Zufuhr von C und/oder D erforderlichen Dosiereinrichtungen wurden ebenfalls bereits beschrieben.

Bevorzugt werden als Durchmischungs- und/oder Knetelemente Knetblöcke mit nichtfördernden Knetscheiben und/oder Knetblöcke mit fördernder Steigung, Knetblöcke mit unterschiedlicher Stegbreite, Zahnmischelemente und Schmelzemischelemente, und als Dosiereinrichtungen Extruder mit einer oder zwei Schnecken (sog. Seitenextruder), und/oder Pumpen, insbesondere Schmelzepumpen, verwendet.

In einer bevorzugten Ausführungsform wird die Gesamtmenge der Komponenten C und/oder D, die in den Extruder eingeführt werden sollen, in einem oder mehreren der Abschnitte Entgasungsabschnitt 6, weiterer Abschnitt 7 und Dosierabschnitt 2, dem Extruder zugeführt.

Die Zugabe der Komponenten C und/oder D kann gemeinsam durch mindestens eine oder getrennt durch mehrere Zufuhröffnungen erfolgen.

Der letzte Abschnitt des Extruders ist die Austragszone 8. Sie besteht aus einer Förderschnecke und einem geschlossenen Gehäuseteil, das mit einer definierten Austragsöffnung abgeschlossen ist. Bevorzugt ist die Austragszone beheizt.

Bevorzugt wird als Austragsöffnung ein Düsenkopf verwendet, der beispielsweise als Düsenplatte oder Düsenleiste ausgebildet ist, wobei die Düsen kreisförmig (Düsenlochplatte oder -leiste), schlitzförmig oder in anderer Weise gestaltet sein können. Das im Falle einer Düsenlochplatte als Strang ausgetragene Produkt wird wie üblich, z. B. in Wasser abgekühlt und granuliert. Speziell bei Verwendung einer Schlitzdüse ist Würfelgranulierung möglich.

In einer besonderen Ausführungsform wird statt der oben beschriebenen Düsenlochplatte oder -leiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird unter Wasser von rotierenden Messern abgetrennt und unter Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das enstehende Granulat wird danach weiter gekühlt oder kühlt bei der Weiterverarbeitung ab, sofern dies notwendig ist. Es ist auch die Weiterverarbeitung im heißen Zustand oder die Direktextrusion von Platten, Folien, Rohren und Profilen möglich.

In einer anderen Ausführungsform wird eine sog. Unterwasser-Stranggranulierung eingesetzt. Dabei tritt die Schmelze als Strang aus einer Düsenplatte aus, und wird sofort durch einen Wasserschwall benetzt, wonach die Stränge über eine schiefe Ebene in ein Wasserbad eingeführt und nach dem Abkühlen granuliert werden.

In einer weiteren besonderen Ausführungsform ist die Austragszone 8 mit einer Vorrichtung zur Filtration der aus dem Extruder austretenden Schmelze versehen, die sich - in Förderrichtung betrachtet - vor dem Düsenkopf befindet. Derartige Vorrichtungen zur kontinuierlichen Schmelzefiltration sind dem Fachmann bekannt und handelsüblich. Man kann, falls notwendig, zwischen Austragszone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende Schmelze wird granuliert bzw. auf andere Art weiterverarbeitet, wie es bereits beschrieben wurde.

Der Wassergehalt des ausgetragenen Polymeren (die "Strangfeuchte") beträgt in der Regel 0,05 bis 1,5 Gew.-%, bezogen auf dieses Polymere. Die Temperatur der aus der Austragsöffnung austretenden Polymerschmelze beträgt in der Regel 180 bis 350°C, je nach Art der eingesetzten Polymeren. Vorteilhaft sollten die Temperaturen so niedrig gehalten werden, daß die thermische Belastung des Polymeren so gering wie möglich ist, eine eiwandfreie Herstellung des gewünschten Produktes jedoch gewährleistet ist.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können. Speziell kann es zur Erlangung bestimmter Produkteigenschaften sinnvoll sein, bestimmte Teilbereiche des Extruders zu kühlen oder auf eine bestimmte, von der Temperatur des restlichen Extruders abweichende Temperatur zu temperieren.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines weiten Bereiches variieren kann. Nur beispielhaft sei eine Drehzahl der Extruderschnecken im Bereich von 50 bis 1200 $min^{-1}$ genannt. Bevorzugt ist ein Drehzahlbereich von 100 bis 700 $min^{-1}$. Es ist vorteilhaft, den Extruder so auszugestalten und zu betreiben, daß sich, bei einer Schneckendrehzahl von 50 bis 1200 $min^{-1}$, im Bereich der Abquetschabschnitte mittlere Schergeschwindigkeiten von 15 bis 450 $s^{-1}$ einstellen. Für den bevorzugten Drehzahlbereich 100 bis 700 $min^{-1}$ werden vorteilhaft Schergeschwindigkeiten von 35 bis 260 $s^{-1}$ eingestellt. Jedoch kann es je nach Art, Menge und Eigenschaften der verwendeten Komponenten zweckmäßig sein, bei mittleren Schergeschwindigkeiten außerhalb dieses Bereiches zu arbeiten.

Als Extruderschnecken können alle handelsüblichen Schnecken verwendet werden, beispielsweise Schnecken mit einem Außendurchmesser von 10 bis 1000 mm. Welche Schneckendurchmesser geeignet sind, richtet sich z.B. nach der Art und Menge der in den Extruder eindosierten Komponenten. Der Außendurchmesser der Schnecken kann entlang des Extruders konstant sein oder in gewissen Grenzen variieren.

Im Extruder können je nach Art und Mengen der Komponenten, Schnecken mit kleiner Gangtiefe oder Schnecken mit großer Gangtiefe (sog. "tiefgeschnittene Schnecken") verwendet werden. Bevorzugt werden Schnecken einem Gangtiefenverhältnis $D_{Schnecke, außen}/D_{Schnecke, innen}$ von 1,2 bis 1,8, bevorzugt 1,4 bis 1,6, besonders bevorzugt 1,45 bis 1,58, verwendet. Eine handelsübliche Ausführungsform des Extruders, der für das erfindungsgemäße Verfahren geeignet ist, weist beispielsweise ein Gangtiefenverhältnis von 1,55 auf, hat also eine große Gangtiefe.

In einer anderen Ausführungsform werden Schnecken mit mittlerer Gangtiefe, besonders solche mit einem Gangtiefenverhältnis von 1,4 bis 1,48 verwendet. Diese Ausführungsform des Extruders ist ebenfalls handelsüblich und kann für bestimmte Komponenten und bestimmte Mengen der Komponenten vorteilhaft sein. Es sind auch Schnecken mit Gangtiefenverhältnissen von mehr als 2 geeignet.

Die Gangzahl n der Schnecke kann variieren, insbesondere ist n gleich 1, 2 oder 3. Bevorzugt werden zweigängige Schnecken verwendet. Jedoch können auch Schnecken mit anderen Gangzahlen eingesetzt werden, oder solche Schnecken, die Abschnitte mit unterschiedlichen Gangzahlen aufweisen.

Insbesondere können Extruderschnecken verwendet werden, bei denen das Gangtiefenverhältnis entlang der Schnecke variiert, wobei ein Zusammenhang zwischen Gangzahl und Gangtiefenverhältnis besteht (Stufenschnecke). Bevorzugt kann eine Schnecke eingesetzt werden, bei dem der Wechsel von 3 auf 2 Gänge mit einer Änderung der Gangtiefe von niedrigem zu hohem Gangtiefenverhältnis einhergeht.

Als Elastomerkomponente A kann jedes Polymere eingesetzt werden, das elastomere Eigenschaften hat und einem Extruder zugeführt werden kann. Es kann auch eine Mischung verschiedener Elastomerkomponenten A eingesetzt werden.

Insbesondere werden als Komponente A, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Chloropren, Styrol, Alkylstyrol, $C_1$- bis $C_{10}$-Alkylester der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.

Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Methylmethacrylat, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril. In Kern oder Schale können bis zu 10 Gew.-% funktionelle Gruppen tragende, polare Monomere oder auch vernetzend wirkende Monomere, einpolymerisiert sein.

In dieser Ausführungsform werden als thermoplastische Polymere B Styrol-Acrylnitril - (SAN) - Copolymere, Copolymere aus α-Methylstyrol und Acrylnitril, Polystyrol, Polymethylmethacrylat, Polyvinylchlorid oder Mischungen dieser Polymere eingesetzt.

Dabei sind SAN-Polymere, Copolymere aus α-Methylstyrol und Acrylnitril, Polymethylmethacrylat (PMMA) oder Mischungen dieser Polymere bevorzugt.

Weiterhin können als thermoplastische Polymere B auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide, und Mischungen dieser Thermoplasten, eingesetzt werden. Außerdem können auch thermoplastische Elastomere wie thermoplastisches Polyurethan (TPU) als Polymeres B verwendet werden.

Ebenso kann man als Komponente B Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat/imidiertem Maleinsäureanhydrid, Styrol/ Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol, oder durch kernalkylierte Styrole, oder durch Acrylnitril ersetzt sein.

Von den zuletzt genannten Polymeren B sind solche auf Basis von α-Methylstyrol/Acrylnitril, Styrol/Maleinsäureanhydrid, Styrol/ Methylmethacrylat und Copolymere mit imidiertem Maleinsäureanhydrid bevorzugt.

Bekannte Beispiele für die Elastomerkomponente A sind Polymerisate von konjugierten Dienen wie Butadien, mit einer äußeren Pfropfhülle auf Basis einer vinylaromatischen Verbindung wie etwa SAN-Copolymeren. Gleichfalls bekannt sind Pfropfkautschuke auf Basis von vernetzten Polymerisaten aus $C_1$- bis $C_{10}$-Alkylestern der Acrylsäure wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im wesentlichen ein Copolymerisat aus konjugierten Dienen und $C_1$- bis $C_{10}$-Alkylacrylaten, beispielsweise ein Butadien-n-Butylacrylat-Copolymerisat, und eine äußere Pfropfstufe aus SAN-Copolymer, Polystyrol oder PMMA enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat) -Mischkautschuken ist der EP-A 62 901 zu entnehmen.

Als thermoplastische Polymere B werden im Falle der im letzten Absatz genannten Pfropfkautschuke beispielsweise Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse $\overline{M}_w$ von etwa 40000 bis 2000000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 ff beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 60 Gew.-% Restwassergehalt auf Basis von Polydienen und/oder Polyalkylacrylaten sowie SAN und/oder PMMA eingesetzt, die aus mehr als zwei Pfropfstufen aufgebaut sind.

Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich. Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder anderen dem Stand der Technik entsprechende Aufbau solcher Pfropfkautschuke möglich ist. Derartige Kautschuke werden als schlagzäh machende Komponente für Polyvinylchlorid und bevorzugt für schlagzähes PMMA eingesetzt. Als thermoplastische Polymere B werden bevorzugt wiederum die genannten SAN-Copolymere und/oder PMMA verwendet. Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA. Bevorzugte Komponente B sind auch in dieser Ausführungsform die genannten SAN-Copolymere, Polystyrol und/oder PMMA.

Der Durchmesser der partikelförmigen Pfropfkautschuke A beträgt in der Regel 0,05 bis 20 µm. Handelt es sich um die allgemein bekannten Pfropfkautschuke kleinen Durchmessers, so beträgt er bevorzugt 0,08 bis 1,5 und besonders bevorzugt 0,1 bis 0,8 µm.

Bei den beispielsweise mittels Suspensionspolymerisation hergestellten großteiligen Pfropfkautschuken ist der Durchmesser bevorzugt 1,8 bis 18 und insbesondere 2 bis 15 µm. Derartige Pfropfkautschuke großen Durchmessers lehrt beispielsweise die DE-OS 44 43 886.

Die Teilchengrößenverteilung der Pfropfkautschuk-Partikel kann eng oder breit sein, und sie kann ein Maximum aufweisen (mono-modal), oder auch zwei Maxima aufweisen (bimodal). Auch Teilchengrößenverteilungen mit mehr als zwei Maxima sind möglich.

Bei der Komponente C handelt es sich um weitere Polymere, insbesondere um thermoplastische Polymere. Für die Komponente C kommen alle Polymere in Betracht, die für das thermoplastische Polymere B genannt wurden. Falls die Komponenten B und C identisch sind, so wird die Komponente C dem Extruder an einer anderen Stelle zugeführt als die Komponente B.

Sind die Monomeren, aus denen die Polymere B und C aufgebaut sind, identisch, so können sich die Komponenten B und C durch die Mengenanteile der Monomere unterscheiden - beispielsweise können die Polymere B und C Styrol-Acrylnitril-Copolymere sein, die sich im Styrol:Acrylnitril-Verhältnis unterscheiden. Falls auch die Mengenanteile der Monomeren identisch sind, können sich die Polymere B und C durch ihre verschiedenen mittleren Molmassen $\overline{M}_w$(B) und $\overline{M}_w$ (C), meßbar beispielsweise als verschiedene Viskositätszahlen VZ(B) und VZ(C), unterscheiden.

Als Monomere zur Herstellung von C können neben den für die Komponente B unter anderem genannten Monomeren Styrol, Acrylnitril, Methylmethacrylat und Vinylchlorid auch folgende andere Verbindungen als wesentliche Bestandteile verwendet werden:

- $\alpha$-Methylstyrol und $C_1$ bis $C_8$-kernalkylierte Styrole bzw. $\alpha$-Methylstyrole,
- Methacrylnitril,
- $C_1$ bis $C_{20}$-Alkylester der Acrylsäure und der Methacrylsäure
- Maleinsäure, Maleinsäureanhydrid, sowie Maleinsäureimide
- Vinylether, Vinylformamid.

Beispielhaft seien für die Komponente C Polymere auf Basis $\alpha$-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Weitere bevorzugte Polymere C sind

- Styrol-Acrylnitril-Copolymere mit von der Komponente B abweichenden Mengenanteilen der Monomeren, oder verschiedenen mittleren Molmassen $\overline{M}_w$,
- Copolymere aus $\alpha$-Methylstyrol und Acrylnitril,
- Polymethylmethacrylate,
- Polycarbonate,
- Polybutylenterephthalat und Polyethylenterephthalat,
- Polyamide,
- Copolymere aus mindestens zwei der Monomeren Styrol, Methylmethacrylat, Maleinsäureanhydrid, Acrylnitril und Maleinimiden, beispielsweise Copolymere aus Styrol, Maleinsäureanhydrid und Phenylmaleinimid,
- schlagzäh modifiziertes Polystyrol (HIPS), wobei als Kautschukkomponente des HIPS insbesondere Polybutadien verwendet wird,
- mittels Massepolymerisation oder Lösungspolymerisation hergestelltes ABS,
- thermoplastische Polyurethane (TPU).

Die Herstellung dieser Polymere ist dem Fachmann bekannt, weshalb nachfolgend nur kurz darauf eingegangen wird.

Unter Polymethylmethacrylaten sind insbesondere Polymethylmethacrylat (PMMA) sowie Copolymere auf der Basis von Methylmethacrylat mit bis zu 40 Gew.-% weiterer copolymerisierbarer Monomerer zu verstehen, wie sie beispielsweise unter den Bezeichnungen Lucryl® von der BASF Aktiengesellschaft oder Plexiglas® von Röhm GmbH erhältlich sind. Nur beispielhaft sei ein Copolymeres aus 98 Gew.-% Methylmethacrylat und 2 Gew.-% Methylacrylat als Comonomer (Plexiglas® 8N, Fa. Röhm) genannt. Ebenso geeignet ist ein Copolymeres aus Methylmethacrylat mit Styrol und Maleinsäureanhydrid als Comonomeren (Plexiglas® HW55, Fa. Röhm).

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyhenyl)propan, im allgemeinen als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydihenylether, 4,4'-Dihydroxydiphenylsulfit, 4,4'-dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Polycarbonate sind beispielsweise unter den Handelsnamen Makrolon® (Fa. Bayer), Lexan® (Fa. General Electric), Panlite® (Fa. Tejin) oder Calibre® (Fa. Dow) erhältlich. Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Polybutylenterephthalat und Polyethylenterephthalat werden in der Regel in an sich bekannter Weise durch Kondensation von ) Terephthalsäure bzw. deren Estern mit Butandiol bzw. Ethandiol unter Katalyse hergestellt. Dabei wird die Kondensation vorteilhaft zweistufig (Vorkondensation und Polykondensation) durchgeführt. Einzelheiten sind etwa Ullmann's Encyclopädie der Technischen Chemie, 4. Auflage, Band 19, S. 61-88 zu entnehmen. i Polybutylenterephthalat ist beispielsweise als Ultradur® (Fa. BASF) im Handel erhältlich.

Bevorzugte Polyamide sind ganz allgemein solche mit aliphatischem teilkristallinen oder teilaromatischem sowie amorphem Aufbau jeglicher Art und deren Blends. Entsprechende Produkte sind z.B. unter dem Handelsnamen Ultramid® (Fa. BASF) erhältlich.

Die Herstellung von kautschukmodidiziertem, schlagzähem Polystyrol (HIPS) ist dem Fachmann bekannt. Im allgemeinen wird ein Polybutadien-Kautschuk in monomerem Styrol gelöst und anschließend die erhaltene Lösung von Polybutadien in Styrol polymerisiert. Die Polymerisation wird beispielsweise in zwei Stufen vorgenommen, wobei die sog. Vorpolymerisation in einem ersten Reaktor und die nachfolgende Hauptpolymerisation in einem nachfolgenden Reaktor durchgeführt wird. Als Polymerisationsinitiatoren werden die üblichen Radikalbildner verwendet, jedoch können auch Redox-Systeme eingesetzt werden. Außerdem können beispielsweise Molekulargewichtsregler mitverwendet werden. Die Herstellung erfolgt in der Regel entweder im kontinuierlichen Lösungsverfahren (beide Stufen in Lösung) oder diskontinuierlich im sog. Masse-/Suspensionsverfahren (erste Stufe in Masse, zweite Stufe in Suspension). Einzelheiten sind beispielsweise der US-PS 4 362 850 und Ullmanns Encyclopedia of Technical Chemistry, Vol. A21, S. 644-647, zu entnehmen. Ein Verfahren zur kontinuierlichen Lösungspolymerisation für ABS ist auch in der EP-A 477 764 beschrieben.

Mittels Lösungspolymerisation hergestellte Polymerisate sind an sich bekannt. Aus Lösungs-ABS bestehende Pfropfpolymerisate haben in der Regel einen mittleren Teilchendurchmesser $d_{50}$ von 700 bis 20000, bevorzugt 1000 bis 15000 nm, sind also deutlich größer als ABS-Pfropfteilchen, die nach dem ansonsten üblicherweise verwendeten Emulsionspolymerisationsverfahren oder nach anderen Polymerisationsverfahren hergestellt werden.

Bei dem Verfahren der Lösungspolymerisation sind, im Unterschied zur Suspensions- oder Emulsionspolymerisation, sowohl die Monomeren als auch die daraus entstehenden Polymeren im gewählten Lösungsmittel gelöst. Die Herstellung des Lösungs-ABS erfolgt in der Regel analog der Herstellung von kautschukmodifiziertem, schlagzähen Polystyrol. Im allgemeinen wird ein Polybutadien-Kautschuk in einem Gemisch aus monomerem Styrol und monomerem Acrylnitril gelöst und anschließend die erhaltene Lösung von Polybutadien in Styrol/Acrylnitril polymerisiert. Die Polymerisation wird beispielsweise in zwei Stufen vorgenommen, wobei die sog. Vorpolymerisation in einem ersten Reaktor und die nachfolgende Hauptpolymerisation in einem nachfolgenden Reaktor durchgeführt wird. Als Polymerisationsinitiatoren werden die üblichen Radikalbildner verwendet, jedoch können auch Redox-Systeme eingesetzt werden. Außerdem können beispielsweise Molekulargewichtsregler mitverwendet werden. Die Herstellung erfolgt in der Regel entweder im kontinuierlichen Lösungsverfahren (beide Stufen in Lösung) oder diskontinuierlich im sog. Masse-/Suspensions- verfahren (erste Stufe in Masse, zweite Stufe in Suspension). Einzelheiten sind beispielsweise der US-PS 4 362 850 und Ullmanns Encyclopedia of Technical Chemistry, Vol. A21, S. 644-647, zu entnehmen. Ein Verfahren zur kontinuierlichen Lösungspolymerisation für ABS ist auch in der EP-A 477 764 beschrieben.

Thermoplastische Polyurethane werden üblicherweise hergestellt durch Umsetzung von organischen, vorzugsweise aromatischen Diisocyanaten wie etwa 4,4'-Diphenylmethandiisocyanat, mit Polyhydroxylverbindungen, die vorzugsweise im wesentlichen linear sind, etwa Polyetherole, oder Polyesterole wie Polyalkylenglycolpolyadipate, und als Kettenverlängerungsmittel wirkenden Diolen wie Butan-1,4-diol, in Gegenwart von Katalysatoren wie etwa tertiären Aminen (wie Triethylamin) oder organischen Metallverbindungen.

Dabei beträgt das Verhältnis NCO-Gruppen der Diisocyanate zur Summe der OH-Gruppen (aus den Polyhydroxylverbindungen und den kettenverlängernden Diolen) bevorzugt etwa 1 zu 1.

Bevorzugt erfolgt die Herstellung der TPU nach dem sogenannten Bandverfahren, bei dem die genannten Komponenten und der Katalysator mittels eines Mischkopfes kontinuierlich gemischt und die Reaktionsmischung auf ein Förderband aufgebracht wird. Das Band durchläuft eine auf 60 bis 200°C temperierte Zone, wobei die Mischung ausreagiert und erstarrt.

Einzelheiten zu den TPU sind z.B. der EP-A 443 432 zu entnehmen. TPU sind beispielsweise unter dem Handelsnamen Elastollan® (Fa. Elastogran) erhältlich.

Weiterhin kann die Komponente C im wesentlichen aus Copolymeren von $C_2$- bis $C_8$-Alkenen wie Ethylen, Propen und Buten mit

- Vinylaromaten,
- polaren Comonomeren wie Acrylsäure und Methacrylsäure, den $C_1$- bis $C_{10}$-Alkylestern der Acrylsäure und der Methacrylsäure,
- anderen mono- oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit $C_1$ bis $C_8$-Alkanolen und Estern mit arylsubstituierten $C_1$ bis $C_8$-Alkanolen,
- Kohlenstoffmonoxid,
- nichtaromatischen Vinylverbindungen wie Vinylacetat, Vinylpropionat und Vinylalkylether,
- basischen Monomeren wie Hydroxyethylacrylat, Dimethylaminoethylacrylat, Vinylcarbazol, Vinylanilin, Vinylcaprolactam, Vinylpyrrolidon, Vinylimidazol und Vinylformamid,
- Acrylnitril, Methacrylnitril

bestehen, die in allgemein bekannter Weise hergestellt werden.

In einer bevorzugten Ausführungsform wird ein Polymeres C verwendet, das aus 40 bis 75 Gew.-% Ethylen, 5 bis 20 Gew.-% Kohlenstoffmonoxid und 20 bis 40 Gew.-% n-Butylacrylat herstellbar ist (als Elvaloy® HP-4051 (Fa. DuPont) im Handel erhältlich), oder ein Polymeres, das aus 50 bis 98,9 Gew.-% Ethylen, 1 bis 45 Gew.-% n-Butylacrylat und 0,1 bis 20 Gew.-% einer oder mehreren Verbindungen ausgewählt aus der Gruppe Acrylsäure, Methacrylsäure und Maleinsäureanhydrid, herstellbar ist. Die Herstellung der letztgenannten Ausführungsformen erfolgt üblicherweise durch radikalische Polymerisation und ist in den Schriften US 2 897 183 und US 5 057 593 beschrieben.

Außerdem sind Copolymere aus Butadien (oder substituierten Butadienen) mit Comonomeren, wie bevorzugt etwa Styrol, Methylmethacrylat oder Acrylnitril geeignet, beispielsweise Nitrilkautschuk (NBR) oder Styrol-Butadien-Kautschuk (SBR). Die olefinischen Doppelbindungen in diesen Copolymeren können ganz oder teilweise hydriert sein.

Ebenso sind als Komponente C nichthydrierte, hydrierte oder teilweise hydrierte, Copolymere aus Butadien und Styrol mit Blockstrukturen geeignet. Sie werden bevorzugt nach der Methode der anionischen Polymerisation in Lösung unter Verwendung metallorganischer Verbindungen wie sek.-Butyllithium hergestellt, wobei lineare Blockkautschuke beispielsweise des Aufbaus Styrol/Butadien (Zweiblock) oder Styrol/Butadien/Styrol (Dreiblock) entstehen. Diese Blöcke können von Polymeren mit statistischer Verteilung voneinander getrennt sein, und ferner können die Blöcke auch in untergeordneten Mengen Einheiten des jeweils anderen Monomeren enthalten.

Bei Mitverwendung geringer Mengen eines Ethers, insbesondere Tetrahydrofuran (THF) neben dem Initiator, entstehen Polymerketten, welche, von einem Butadien-reichen Ausgangssegment ausgehend, entlang der Kette einen steigenden Styrolgehalt aufweisen und schließlich in einem Homo-Polystyrol-Endsegment enden. Einzelheiten des Herstellungsverfahrens sind in der DE-A 31 06 959 beschrieben. Auch derart aufgebaute, gegebenenfalls hydrierte oder teilweise hydrierte, Polymere C sind gut geeignet.

Ebenfalls gut geeignet als Komponente C sind Polymere mit sternförmiger Struktur, die man durch Verknüpfung mehrerer Polymerketten, hauptsächlich von Dreiblockpolymerisaten des Typs Styrol/Butadien/Styrol, über polyfunktionelle Moleküle erhält. Geeignete Verknüpfungsmittel sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogenide wie $SiCl_4$, Metallhalogenide wie $TiCl_4$ und Polyvinylaromaten wie Divinylbenzole. Näheres über die Herstellung dieser Polymeren ist z.B. der DE-A 26 10 068 zu entnehmen.

Als Komponente C können auch Mischungen aus mindestens zwei der für C bisher genannten Polymeren verwendet werden.

Neben der Elastomerkomponente A und den Polymeren B und C können die nach dem erfindungsgemäßen Verfahren hergestellten Formmassen als weitere Komponente D Zusatzstoffe, beispielsweise Wachse, Weichmacher, Gleit- und Entformungsmittel, Pigmente, Farbstoffe, Mattierungsmittel, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Zusatzstoffe D können in reiner Form fest, flüssig oder gasförmig vorliegen, oder bereits als Gemisch der reinen Stoffe miteinander eingesetzt werden. Sie können ebenso in einer Formulierung eingesetzt werden, welche die Dosierung erleichtert, etwa als Lösung, oder als Dispersion (Emulsion oder Suspension). Auch eine Formulierung als Masterbatch, d.h. als konzentrierte Mischung mit einem mit dem Extruderinhalt verträglichen thermoplastischen Polymeren, ist geeignet und in manchen Fällen bevorzugt.

Die Polymeren C und die Zusatzstoffe D können in einem oder mehreren der genannten Extruderabschnitte dem Extruder zugeführt werden. In einer bevorzugten Ausführungsform werden die Komponenten C und D - getrennt von der Elastomerkomponente A und dem thermoplastischen Polymeren B - im Entlüftungsabschnitt 1, im Dosierabschnitt 2, und/oder im Abschnitt 4, in dem das Polymere B dem Extruder zugeführt wird, in den Extruder eingeführt. In einer weiteren bevorzugten Ausführungsform werden die Komponenten C und/oder D im weiteren Abschnitt 7 dem Extruder zugeführt.

Die Bestandteile C und D können in den bzw. die gleichen Abschnitte oder jeweils in verschiedene Extruderabschnitte eindosiert werden, und man kann sowohl C als auch D zu 100 % in einem Abschnitt oder verteilt auf mehrere Abschnitte dem Extruder zuführen.

Die genaue Ausgestaltung der Zufuhr von C und D hängt ab von den erwähnten physikalischen und chemischen Eigenschaften der Komponenten A bis D und deren Mengenverhältnissen. So können beispielsweise Zusatzstoffe D mit geringer thermischer Beständigkeit erst in der Austragszone dem Extruder zugeführt werden, wodurch ein thermischer Abbau der Stoffe D weitgehend verhindert wird.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil des erfindungsgemäßen Verfahrens ist, daß ein erheblicher Teil des Restwassers, welches in der teilentwässerten Elastomerkomponente A enthalten ist, bereits in den Abquetschzonen mechanisch entfernt wird, weshalb in den nachfolgenden Extruderabschnitten weniger thermische Energie zur Verdampfung des verbliebenen Wassers angewendet werden muß. Es resultiert eine deutliche Energieeinsparung.

Ein weiterer Vorteil des erfindungsgemäßen Verfahrens liegt darin, daß der Extruder bei niedrigen Temperaturen betrieben werden kann als beispielsweise gemäß dem in der EP-A 534 235 beschriebenen Verfahren, so daß die Elastomerkomponente A und das aus den Bestandteilen A, B, C und D bestehende Polymere schonender verarbeitet wird. Weiterhin kann auf druckaufbauende Schneckenelemente im Entgasungsteil, die das Polymere thermisch und mechanisch stark beanspruchen, in der Regel verzichtet werden.

Durch das Einarbeiten einer teilentwässerten Elastomerkomponente A in die Schmelze eines thermoplastischen Polymeren B und das Zumischen weiterer Polymere C sowie von Zusatzstoffen D lassen sich, Verträglichkeit oder zumindest Teilverträglichkeit der Elastomerkomponente mit den anderen Komponenten und ausreichende thermische Beständigkeit vorausgesetzt, in einem einzigen Verfahrensschritt kautschukmodifizierte thermoplastische Formmassen verschiedenster Art und Additivierung mit hohem Durchsatz herstellen. Insbesondere lassen sich durch Zumischen weiterer Polymeren C die verschiedensten Polymerblends herstellen. Indem es das Verfahren ermöglicht, das Polymere B entweder an einer oder an mehreren Stellen dem Extruder zuzuführen lassen sich die Produkteigenschaften vorteilhaft verändern.

Gegenüber den aus dem Stand der Technik bekannten Verfahren hat das erfindungsgemäße Verfahren weiterhin den Vorteil, daß keine verstopfungsanfälligen Seihergehäuse verwendet werden. Dadurch kann das Verfahren über eine lange Dauer betrieben werden, ohne daß der Extruder wegen Verstopfungserscheinungen im Entwässerungsbereich abgeschaltet, gereinigt und wieder angefahren werden muß.

Die erfindungsgemäße Anordnung des Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sog. "Schüssen", verfügbar und ermöglichen eine genaue Anpassung des Extruders an das spezielle Konfektionierungsproblem.

Beispiele

Unter "Schnecke" ist jeweils eine gleichsinnig rotierende Doppelschnecke zu verstehen. In Klammern ist die in der Beschreibung verwendete Bezeichnung der Extruderabschnitte angegeben.

a) Extruderkonfiguration I

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1:     Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A).

Schuß 2:     Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke
(Abquetschabschnitt 3, vorderer Teil).

Schuß 3:     Länge 4 D, unbeheizt, ohne Öffnungen, enthält als Stauelemente Knetblock und Gewinde entgegen der Förderrichtung; der Abstand zwischen dem ersten Stauelement und der zugehörigen Entwässerungsöffnung in Schuß 2 beträgt 3 D
(Abquetschabschnitt 3, hinterer Teil).

Schuß 4:     Länge 4 D, unbeheizt, ohne Öffnungen und mit fördernder Schnecke.

Schuß 5:     Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elementen und Knetblöcke
(Abschnitt 4, in dem die Schmelze des thermoplastischen Polymeren B zugeführt wird).

Schuß 6:     Länge 4 D, beheizt, ohne Öffnungen, mit einem Schneckenabschnitt, der Knetblöcke enthält
(Plastifizierungsabschnitt 5).

Schuß 7:     Länge 4 D, beheizt, mit obenliegender Entgasungsöffnung und Förderschnecke, Entgasung wird unter Normaldruck betrieben
(erster Entgasungsabschnitt 6).

Schuß 8:     Länge 4 D, beheizt, mit obenliegender Entgasungsöffnung und Förderschnecke, Entgasung wird unter Normaldruck betrieben
(zweiter Entgasungsabschnitt 6').

Schuß 9-12:   Länge jeweils 4 D, beheizt, ohne Öffnungen und mit fördernder Schnecke (Austragszone 8, vorderer Teil)

Abschluß:     Düsenleiste mit zylindrischen Bohrungen (Austragszone 8, hinterer Teil).

Der Schneckendurchmesser beträgt D = 40 mm. Die Schnecke ist tiefgeschnitten (große Gangtiefe), das Gangtiefenverhältnis $D_{\text{Schnecke außen}}/D_{\text{Schnecke innen}}$ ist 1,55. Die Schnecke ist zweigängig ausgeführt.

b) Extruderkonfiguration II

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1:      Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A).

Schuß 2:      Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke
(Abquetschabschnitt 3, vorderer Teil).

Schuß 3: Länge 4 D, unbeheizt, ohne Öffnungen, enthält als Stauelemente Knetblock und Gewinde entgegen der Förderrichtung; der Abstand zwischen dem ersten Stauelement und der zugehörigen Entwässerungsöffnung in Schuß 2 beträgt 3 D (Abquetschabschnitt 3, hinterer Teil).

Schuß 4: Länge 4 D, unbeheizt, ohne Öffnungen und mit fördernder Schnecke.

Schuß 5: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elemente und Knetblöcke (Abschnitt 4, in dem die Schmelze des thermoplastischen Polymeren B zugeführt wird).

Schuß 6: Länge 4 D, beheizt, ohne Öffnungen, mit einem Schneckenabschnitt, der Knetblöcke enthält (Plastifizierungsabschnitt 5).

Schuß 7: Länge 4 D, beheizt, mit obenliegender Entgasungsöffnung und Förderschnecke, Entgasung wird unter Normaldruck betrieben (erster Entgasungsabschnitt 6).

Schuß 8: Länge 4 D, beheizt, mit obenliegender Entgasungsöffnung und Förderschnecke, Entgasung wird unter Normaldruck betrieben (zweiter Entgasungsabschnitt 6').

Schuß 9: Länge 4 D, beheizt, mit seitlicher Dosieröffnung, die mit einem Seitenextruder ZSK 25 oder ZSK 53 (je nach Durchsatz, von Fa. Werner und Pfleiderer) versehen ist; Schnecke des Hauptextruders enthält fördernde Elemente und Knetblöcke (weiterer Abschnitt 7, in dem die Komponenten C und/oder D zugeführt werden, vorderer Teil)

Schuß 10: Länge 4 D, beheizt, mit obenliegender Öffnung, die mit einem Einleitungsstutzen versehen ist; Schnecke mit Knetblöcken (weiterer Abschnitt 7, in dem die Komponenten C und/oder D zugeführt werden, hinterer Teil)

Schuß 11-12: Länge jeweils 4 D, beheizt, ohne Öffnungen und mit fördernder Schnecke (Austragszone 8, vorderer Teil).

Abschluß: Düsenleiste mit zylindrischen Bohrungen (Austragszone 8, hinterer Teil).

Der Schneckendurchmesser beträgt D = 40 mm. Die Schnecke ist tiefgeschnitten (große Gangtiefe), das Gangtiefenverhältnis $D_{Schnecke\ außen}/D_{Schnecke\ innen}$ ist 1,55. Die Schnecke ist zweigängig ausgeführt.

c) Extruderkonfiguration III

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1: Länge 4 D, unbeheizt, mit obenliegender Dosieröffnung, die mit einer Dosiereinrichtung ESB 45 von Fa. Werner und Pfleiderer versehen ist, und neutralfördernder Schnecke (Dosierabschnitt 2 für Elastomerkomponente A).

Schuß 2: Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke (erster Abquetschabschnitt 3, vorderer Teil).

Schuß 3: Länge 4 D, unbeheizt, ohne Öffnungen, enthält als Stauelemente Knetblock und Gewinde entgegen der Förderrichtung; der Abstand zwischen dem ersten Stauelement und der zugehörigen Entwässerungsöffnung in Schuß 2 beträgt 3 D

(erster Abquetschabschnitt 3, hinterer Teil).

Schuß 4: Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke
(zweiter Abquetschabschnitt 3', vorderer Teil).

Schuß 5: Länge 4 D, unbeheizt, ohne Öffnungen, enthält als Stauelemente Knetblock und Gewinde entgegen der Förderrichtung; Der Abstand zwischen dem ersten Stauelement und der zugehörigen Entwässerungsöffnung in Schuß 4 beträgt 3 D.
(zweiter Abquetschabschnitt 3', hinterer Teil).

Schuß 6: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elemente und Knetblöcke.
(Abschnitt 4, in dem die Schmelze des thermoplastischen Polymeren B zugeführt wird).

Schuß 7: Länge 4 D, beheizt, ohne Öffnungen, mit einem Schneckenabschnitt, der Knetblöcke enthält
(Plastifizierungsabschnitt 5).

Schuß 8: Länge 4 D, beheizt, mit obenliegender Entgasungsöffnung und Förderschnecke, Entgasung wird unter Normaldruck betrieben
(zweiter Entgasungsabschnitt 6).

Schuß 9: Länge 4 D, beheizt, mit obenliegender Entgasungsöffnung und Förderschnecke, Entgasung wird unter Normaldruck betrieben
(zweiter Entgasungsabschnitt 6').

Schuß 10: Länge 4 D, beheizt, mit seitlicher Dosieröffnung die mit einem Seitenextruder ZSK 25 (Fa. Werner und Pfleiderer) versehen ist; Schnecke des Hauptextruders enthält fördernde Elemente und Knetblöcke
(weiterer Abschnitt 7, in dem die Komponenten C und/oder D zugeführt werden, vorderer Teil).

Schuß 11: Länge 4 D, beheizt, mit obenliegender Öffnung, die mit einem Einleitungsstutzen versehen ist; Schnecke mit Knetblöcken
(weiterer Abschnitt 7, in dem die Komponenten C und/oder D zugeführt werden, hinterer Teil).

Schuß 12: Länge 4 D, beheizt, ohne Öffnungen und mit fördernder Schnecke
(Austragszone 8, vorderer Teil).

Abschluß: Düsenleiste mit zylindrischen Bohrungen
(Austragszone 8, hinterer Teil).

Der Schneckendurchmesser beträgt D = 40 mm. Die Schnecke ist tiefgeschnitten (große Gangtiefe), das Gangtiefenverhältnis $D_{Schnecke\ außen}/D_{Schnecke\ innen}$ ist 1,55. Die Schnecke ist zweigängig ausgeführt.

d) Extruderkonfiguration IV

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1: Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A, vorderer Teil).

Schuß 2: Länge 4 D, unbeheizt, ohne Öffnungen, mit fördernder Schnecke
(Dosierabschnitt 2 für Elastomerkomponente A, hinterer Teil).

Schuß 3: Länge 4 D, unbeheizt, mit obenliegender Entwässerungsöffnung (Bohrung im Extrudergehäuse in Form einer liegenden Acht mit Längsachse in Förderrichtung) enthält als Stauelemente Knetblock und Gewinde entgegen der Förderrichtung; der Abstand zwischen dem ersten Stauelement und der zugehörigen Entwässerungsöffnung beträgt 1,5 D
(erster Abquetschabschnitt 3).

Schuß 4: Länge 4D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, enthält fördernde Schnecke und als Stauelemente Knetblock und Gewinde entgegen der Förderrichtung; der Abstand zwischen dem ersten Stauelement und der zugehörigen Entwässerungsöffnung beträgt 1,5 D
(zweiter Abquetschabschnitt 3').

Schuß 5: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elemente und Knetblöcke
(Abschnitt 4, in dem die Schmelze des thermoplastischen Polymeren B zugeführt wird).

Schuß 6: Länge 4 D, beheizt, ohne Öffnungen, mit einem Schneckenabschnitt, der Knetblöcke enthält
(Plastifizierungsabschnitt 5).

Schuß 7: Länge 4 D, beheizt, mit obenliegender Entgasungsöffnung und Förderschnecke, Entgasung wird unter Normaldruck betrieben
(erster Entgasungsabschnitt 6).

Schuß 8: Länge 4 D, beheizt, mit obenliegender Entgasungsöffnung und Förderschnecke, sowie Knetblock zwischen beiden Entgasungsöffnungen, Entgasung wird unter Normaldruck betrieben
(zweiter Entgasungsabschnitt 6').

Schuß 9: Länge 4 D, beheizt, mit seitlicher Dosieröffnung, die mit einem Seitenextruder ZSK 25 oder ZSK 53 (je nach Durchsatz, von Fa. Werner und Pfleiderer) versehen ist; Schnecke des Hauptextruders enthält fördernde Elemente und Knetblöcke
(weiterer Abschnitt 7, in dem die Komponenten C und/oder D zugeführt werden, vorderer Teil)

Schuß 10: Länge 4 D, beheizt, mit obenliegender Öffnung, die mit einem Einleitungsstutzen versehen ist; Schnecke mit Knetblöcken
(weiterer Abschnitt 7, in dem die Komponenten C und/oder D zugeführt werden, hinterer Teil)

Schuß 11-12: Länge jeweils 4 D, beheizt, ohne Öffnungen und mit fördernder Schnecke
(Austragszone 8, vorderer Teil).

Abschluß: Düsenleiste mit zylindrischen Bohrungen
(Austragszone 8, hinterer Teil).

Der Schneckendurchmesser beträgt D = 40 mm. Die Schnecke ist tiefgeschnitten (große Gangtiefe), das Gangtiefenverhältnis $D_{Schnecke\ außen}/D_{Schnecke\ innen}$ ist 1,55. Die Schnecke ist zweigängig ausgeführt.

e) Extruderkonfiguration V

Es wurde ein Zweischneckenextruder des Typs ZSK 58 von Fa. Werner und Pfleiderer, Stuttgart, eingesetzt, der aus 10 Schüssen aufgebaut ist. Ihre Anordnung war stromab wie folgt:

Schuß 1: Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A).

Schuß 2: Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke, sowie als Stauelemente Knetblock und Gewinde entgegen der Förderrichtung; der Abstand zwischen dem ersten Stauelement und der zugehörigen Entwässerungsöffnung in Schuß 2 beträgt 1 D
(erster Abquetschabschnitt 3).

Schuß 3: Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke
(zweiter Abquetschabschnitt 3', vorderer Teil).

Schuß 4: Länge 4 D, unbeheizt, ohne Öffnungen, enthält als Stauelemente Knetblöcke und Gewinde entgegen der Förderrichtung; der Abstand zwischen dem ersten Stauelement und der zugehörigen Entwässerungsöffnung in Schuß 3 beträgt 3 D
(zweiter Abquetschabschnitt 3', hinterer Teil).

Schuß 5: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält neutrale und fördernde Elemente und Knetblöcke
(Abschnitt 4, in dem die Schmelze des thermoplastischen Polymeren B zugeführt wird).

Schuß 6: Länge 4 D, beheizt, ohne Öffnungen, mit einem Schneckenabschnitt, der Knetblöcke enthält
(Plastifizierungsabschnitt 5).

Schuß 7: Länge 4 D, beheizt, mit obenliegender Entgasungsöffnung und Förderschnecke, Entgasung wird unter Normaldruck betrieben
(erster Entgasungsabschnitt 6).

Schuß 8: Länge 4 D, beheizt, mit obenliegender Entgasungsöffnung und Förderschnecke sowie Knetblock zwischen - beiden Entgasungsöffnungen, Entgasung wird unter Normaldruck betrieben
(zweiter Entgasungsabschnitt 6').

Schuß 9+10: Länge jeweils 4 D, beheizt, ohne Öffnungen und mit fördernder Schnecke
(Austragszone 8, vorderer Teil).

Abschluß: Düsenleiste mit zylindrischen Bohrungen
(Austragszone 8, hinterer Teil).

Der Schneckendurchmesser beträgt D = 58 mm. Die Schnecke ist tiefgeschnitten (große Gangtiefe), das Gangtiefenverhältnis $D_{Schnecke\ außen}/D_{Schnecke\ innen}$ ist 1,55. Die Schnecke ist zweigängig ausgeführt.

f) Extruderkonfiguration VI

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1: Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A, vorderer Teil).

Schuß 2: Länge 4 D, unbeheizt, ohne Öffnungen, mit fördernder Schnecke und einem Knetblock mit rückfördernder Steigung (Dosierabschnitt 2 für Elastomerkomponente A, hinterer Teil).

Schuß 3: Länge 4 D, unbeheizt, mit obenliegender Entwässerungsöffnung (Bohrung im Extrudergehäuse in Form einer liegenden Acht mit Längsachse in Förderrichtung), enthält als Stauelemente eine kurze Kompressionszone mit einer Länge von 0,6 D, einen Knetblock und Gewinde entgegen der Förderrichtung; der Abstand zwischen dem ersten Stauelement und der zugehörigen Entwässerungsöffnung beträgt 1,6 D
(erster Abquetschabschnitt 3).

Schuß 4: Länge 4D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, enthält fördernde Schnecke und als Stauelemente Knetblock und Gewinde entgegen der Förderrichtung; der Abstand zwischen dem ersten Stauelement und der zugehörigen Entwässerungsöffnung beträgt 1,5 D
(zweiter Abquetschabschnitt 3').

Schuß 5: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elemente und Knetblöcke
(Abschnitt 4, in dem die Schmelze des thermoplastischen Polymeren B zugeführt wird).

Schuß 6: Länge 4 D, beheizt, ohne Öffnungen, mit einem Schneckenabschnitt, der Knetblöcke enthält
(Plastifizierungsabschnitt 5).

Schuß 7: Länge 4 D, beheizt, mit obenliegender Entgasungsöffnung und Förderschnecke, Entgasung wird unter Normaldruck betrieben
(erster Entgasungsabschnitt 6).

Schuß 8: Länge 4 D, beheizt, mit obenliegender Entgasungsöffnung und Förderschnecke, sowie Knetblock zwischen beiden Entgasungsöffnungen, Entgasung wird unter Normaldruck betrieben
(zweiter Entgasungsabschnitt 6').

Schuß 9: Länge 4 D, beheizt, mit seitlicher Dosieröffnung, die mit einem Seitenextruder ZSK 25 oder ZSK 53 (je nach Durchsatz, von Fa. Werner und Pfleiderer) versehen ist; Schnecke des Hauptextruders enthält fördernde Elemente und Zahnmischelemente
(weiterer Abschnitt 7, in dem die Komponenten C und/oder D zugeführt werden, vorderer Teil)

Schuß 10-12: Länge jeweils 4 D, beheizt, ohne Öffnungen und mit fördernder Schnecke
(Austragszone 8, vorderer Teil).

Abschluß: Düsenleiste mit zylindrischen Bohrungen
(Austragszone 8, hinterer Teil).

Der Schneckendurchmesser beträgt D = 40 mm. Die Schnecke ist tiefgeschnitten (große Gangtiefe), das Gangtiefenverhältnis $D_{Schnecke\ außen}/D_{Schnecke\ innen}$ ist 1,55. Die Schnecke ist zweigängig ausgeführt.

g) Extruderkonfiguration VII

Es wurde ein Zweischneckenextruder des Typs ZSK 40 von Fa. Werner und Pfleiderer, Stuttgart, eingesetzt, der aus 12 Schüssen aufgebaut ist. Ihre Anordnung war stromab wie folgt:

Schuß 1: Länge 4 D, unbeheizt, mit obenliegender Dosieröffnung, die mit einer Dosiereinrichtung ESB 45 von Fa. Werner und Pfleiderer versehen ist, und neutralfördernder Schnecke
(Dosierabschnitt 2 für Elastomerkomponente A).

Schuß 2: Länge 4 D, unbeheizt, mit obenliegender Entwässerungsöffnung (Bohrung im Extrudergehäuse in Form einer liegenden Acht mit Längsachse in Förderrichtung), die mit einer Rückhalteschnecke versehen ist, und fördernder Schnecke
(Abquetschabschnitt 3, vorderer Teil).

Schuß 3: Länge 4 D, unbeheizt, ohne Öffnungen, enthält als Stauelemente Knetblock und Gewinde entgegen der Förderrichtung; der Abstand zwischen dem ersten Stauelement und der zugehörigen Entwässerungsöffnung in Schuß 2 beträgt 3 D
(Abquetschabschnitt 3, hinterer Teil).

Schuß 4: Länge 4 D, beheizt, mit seitlicher Öffnung, durch die mittels eines Seitenextruders ZSK 53 (Fa. Werner und Pfleiderer) die Schmelze des Polymeren B eingebracht wird; Schnecke des Hauptextruders enthält fördernde Elemente und Knetblöcke
(Abschnitt 4, in dem die Schmelze des thermoplastischen Polymeren B zugeführt wird).

Schuß 5-6:    Länge 4 D, beheizt, ohne Öffnungen, mit einem Schneckenabschnitt, der Knetblöcke enthält
(Plastifizierungsabschnitt 5).

Schuß 7:    Länge 4 D, beheizt, mit obenliegender Entgasungsöffnung und Förderschnecke, Entgasung wird
unter Normaldruck betrieben
(erster Entgasungsabschnitt 6).

Schuß 8:    Länge 4 D, beheizt, mit obenliegender Entgasungsöffnung und Förderschnecke, sowie Knetblock
zwischen beiden Entgasungsöffnungen, Entgasung wird unter Normaldruck betrieben
(zweiter Entgasungsabschnitt 6', vorderer Teil).

Schuß 9:    Länge 4 D, beheizt, ohne Öffnungen, Schnecke enthält fördernde Elemente und Knetblöcke
(zweiter Entgasungsabschnitt 6', hinterer Teil)

Schuß 10-11:    Länge 4 D, beheizt, ohne Öffnung, Schnecke mit Knetblöcken
(Austragszone 8, vorderer Teil)

Schuß 12:    Länge jeweils 4 D, beheizt, ohne Öffnungen und mit fördernder Schnecke
(Austragszone 8, mittlerer Teil).

Abschluß:    Düsenleiste mit zylindrischen Bohrungen
(Austragszone 8, hinterer Teil).

Der Schneckendurchmesser beträgt D = 40 mm. Die Schnecke ist tiefgeschnitten (große Gangtiefe), das Gangtiefenverhältnis $D_{\text{Schnecke außen}}/D_{\text{Schnecke innen}}$ ist 1,55. Die Schnecke ist zweigängig ausgeführt.

h) verwendete Polymerkomponenten

Als Elastomerkomponente A wurden die folgenden Pfropfkautschuke eingesetzt:

A-1: Pfropfpolymerisat aus 5 Stufen auf Basis von Methylmethacrylat bzw. n-Butylacrylat
Es wurde ein Pfropfpolymerisat aus 5 unterschiedlich "harten" bzw. "weichen" Stufen in Emulsion hergestellt. Im Einzelnen wurde verfahren wie beschrieben in der EP-A 512 333, Beispiel 1, Tabelle 1 auf S. 8.

1. Stufe (harter Kern): Methylmethacrylat + Ethylacrylat + Alkylmethacrylat
2. Stufe (weiche erste Schale): n-Butylacrylat + Styrol + Alkylmethacrylat
3. Stufe (harte zweite Schale): Methylmethacrylat + Ethylacrylat + Allylmethacrylat
4. Stufe (weiche dritte Schale): n-Butylacrylat + Styrol + Allylmethacrylat
5. Stufe (harte vierte Schale): Methylmethacrylat + Ethylacrylat.

Das bei jeder Stufe zuerst genannte Monomere ist mengenmäßig das Hauptmonomere. Das ausgefällte Pfropfpolymerisat wurde abgesaugt und mittels einer Technikumszentrifuge bis auf den in den Tabellen angegebenen Wassergehalt entwässert.

A-2: Pfropfpolymerisat auf Basis von Butadien und n-Butylacrylat, gepfropft mit SAN
Eine Mischung von Vinylmethylether, n-Butylacrylat und Butadien wurde in Emulsion polymerisiert und der Latex agglomeriert (mittlere Teilchengröße $d_{50}$:310 nm). Anschließend wurde mit einem Styrol-Acrylnitril-Gemisch pfropfpolymerisiert. Näheres ist der EP-A 62 901, S. 11.Z.1-S.12, Z.14 (Bsp. 2) zu entnehmen, wobei das ausgefällte Pfropfpolymerisat abgesaugt und mittels einer Technikumszentrifuge bis auf den in den Tabellen angegebenen Wassergehalt entwässert wurde.

A-3: Pfropfpolymerisat auf Basis von Butadien, gepfropft mit SAN
Butadien wurde in Emulsion polymerisiert, der erhaltene Latex agglomeriert, wobei ein Latex mit einer mittleren Teilchengröße $d_{50}$ von 238 nm entstand, und anschließend mit einem Gemisch von Styrol und Acrylnitril pfropfpolymerisiert. Näheres ist der DE-AS 24 27 960, Sp. 6, Z. 17 bis Sp. 7, Z. 27, zu entnehmen, wobei das ausgefällte Pfropfpolymerisat mittels einer Technikumszentrifuge bis auf den in den Tabellen angegebenen Wassergehalt entwässert wurde.

A-4:Pfropfpolymerisat auf Basis von n-Butylacrylat, gepfropft mit SAN

n-Butylacrylat wurde mit einem Vernetzer in Emulsion zu einem Latex mit einem mittleren Teilchendurchmesser $d_{50}$ von 123 nm polymerisiert. Auf diesem Latex wurde ein Styrol-Acrylnitril-Gemisch pfropfpolymerisiert. Näheres entnehme man der EP-A 450 485, S. 7, Z. 10-24 (Bsp. A), wobei durch Abschleudern bis auf den in den Tabellen angegebenen Wassergehalt entwässert wurde.

A-5: Pfropfkautschuk auf Basis von n-Butylacrylat, gepfropft mit Styrol und SAN

n-Butylacrylat wurde mit einem Vernetzer in Emulsion in zwei Schritten zu einem Latex mit einem mittleren Teilchendurchmesser $d_{50}$ von 410 nm polymerisiert. Auf diesen Latex wurde eine erste Stufe aus Polystyrol und eine zweite Stufe aus Styrol-Acrylnitril-Copolymer pfropfpolymerisiert. Bezüglich der Einzelheiten sei auf die DE-OS 31 49 358, S. 15, Z. 12 bis S. 16, Z. 24, verwiesen, wobei durch Abschleudern bis auf den in den Tabellen angegebenen Wassergehalt entwässert wurde.

Als thermoplastische Polymere B wurden folgende Polymere verwendet:

B-1: Polymethylmethacrylat

Ein Gemisch aus 99 Gew.-% Methylmethacrylat und 1 Gew.-% Methylacrylat wurde in Suspension polymerisiert wie in EP-A 489 318, S.4, Z. 52 ff gemäß Beispiel 6 (Tabelle auf S. 7) beschrieben. Die Viskositätszahl VZ (ermittelt nach DIN 53726 bei 25°C, 0,26 Gew.-% in Chloroform) betrug 74 ml/g.

B-2: Polymethylmethacrylat

Ein Gemisch aus 96 Gew.-% Methylmethacrylat und 4 Gew.-% Methylacrylat wurde polymerisiert wie unter B-1 beschrieben. Die Viskositätszahl VZ (bestimmt wie bei B-1) betrug 56 ml/g.

B-3:Styrol-Acrylnitril-Copolymeres

Eine Mischung aus 75 Gew.-% Styrol und 25 Gew.-% Acrylnitril wurde nach dem Verfahren der kontinuierlichen Lösungspolymerisation hergestellt, wie es im Kunststoff-Handbuch, Hrg. Vieweg und Daumiller, Bd. V "Polystyrol", Hanser-Verlag München 1969, S. 122-124, beschrieben ist. Die Viskositätszahl VZ (ermittelt nach DIN 53726 bei 25°C, 0,5 Gew.-% in Dimethylformamid) betrug 70 ml/g.

B-4: Styrol-Acrylnitril-Copolymeres

Es wurde vorgegangen wie unter B-3 beschrieben, jedoch ein anderer Polymerisationsgrad eingestellt. Die Viskositätszahl (ermittelt wie bei B-3) betrug 100 ml/g.

B-5: Styrol-Acrylnitril-Copolymeres

Eine Mischung aus 65 Gew.-% Styrol und 35 Gew.-% Acrylnitril wurde polymerisiert wie bei B-3 beschrieben. Die Viskositätszahl (ermittelt wie bei B-3) betrug 80 ml/g.

B-6: Styrol-Acrylnitril-Copolymeres

Es wurde vorgegangen wie unter B-5 beschrieben, jedoch ein anderer Polymerisationsgrad eingestellt. Die Viskositätszahl (ermittelt wie bei B-3) betrug 60 ml/g.

B-7: identisch mit dem Copolymerisat aus α-Methylstyrol/Acrylnitril Komponente C-1.

B-8: identisch mit dem Polycarbonat Komponente C-3.

B-9: identisch mit dem Lösungs-ABS Komponente C-8.

Als weiteres Polymere C wurden die folgenden Polymerisate eingesetzt:

C-1: Copolymerisat aus α-Methylstyrol/Acrylnitril

Ein Copolymerisat aus 70 Gew.-% α-Methylstyrol und 30 Gew.-% Acrylnitril wurde hergestellt wie für das Polymere B beschrieben. Die Viskositätszahl VZ (ermittelt wie bei B-3) betrug 56 ml/g.

C-2: Copolymerisat aus Ethylen/n-Butylacrylat/Kohlenmonoxid

Es wurde ein Copolymerisat aus etwa 55 Gew.-% Ethylen, etwa 15 Gew.-% Kohlenmonoxid und etwa 30 Gew.-% n-Butylacrylat verwendet, im Handel erhältlich als Elvaloy ® HP-4051 (Fa. DuPont).

C-3: Polycarbonat

Es wurde ein handelsübliches Produkt auf Basis von Bisphenol A verwendet (Makrolon® R2800 von Fa. Bayer). Die Viskositätszahl (ermittelt nach DIN 53726 bei 23°C, 0,5 Gew.-% in Dichlormethan) betrug 61,4 ml/g.

C-4: Imidiertes Copolymer aus Styrol und Maleinsäureanhydrid

Es wurde ein handelsübliches Produkt verwendet. Es bestand aus 58 mol-% Styrol und 42 mol-% Maleinsäureanhydrid, und war mit Anilin imidiert, so daß das Produkt 1 Gew.-% freie Maleinsäureanhydrid-Gruppen enthielt. Es wurde das Handelsprodukt Malekka® MS-NA (Fa. Denka Chemicals) verwendet. Seine mittlere Molmasse $\overline{M}_w$ war 135000.

C-5: identisch mit dem Styrol-Acrylnitril-Copolymeren Komponente B-6

C-6: identisch mit dem Polymethylmethacrylat Komponente B-2

C-7: identisch mit dem Styrol-Acrylnitril-Copolymeren Komponente B-5

C-8: Acrylnitril-Butadien-Styrol-Polymeres, hergestellt durch Lösungspolymerisation (Lösungs-ABS), das Polymere enthielt 23,3 Gew.-% einpolymerisiertes Acrylnitril, 69,7 Gew.-% einpolymerisiertes Styrol und 7 Gew.-% Polybutadienkautschuk. Die mittlere Teilchengröße $d_{50}$ betrug 8,7 µm.

C-9: Acrylnitril-Butadien-Styrol-Polymeres, hergestellt durch Lösungspolymerisation (Lösungs-ABS), das Polymere enthielt 22,8 Gew.-% einpolymerisiertes Acrylnitril, 70,7 Gew.-% einpolymerisiertes Styrol und 7 Gew.-% Polybutadienkautschuk. Die mittlere Teilchengröße $d_{50}$ betrug 9 µm.

Als Zusatzstoffe D wurden verwendet:

D-1: Tris(nonylphenyl)phosphit (TNPP). Es wurde das Produkt Irgafos® TNPP (Fa. Ciba-Geigy) verwendet.

D-2: Octadecyl-3-(3,5-di-tert.butyl-4-hydroxyphenyl)-propionat. Es wurde das Produkt Irganox® 1076 (Fa. Ciba-Geigy) verwendet.

D-3: Farbstoff-Masterbatch, enthaltend 20 Gew.-% Ruß und 80 Gew.-% des Styrol-Acrylnitril-Copolymeren Komponente B-1.

D-4: Stabilisator-Masterbatch, enthaltend 1 Gew.-% Bis(2,4-di-tert.butylphenyl)pentaerythritoldiphosphit (Produkt Ultranox® 626 von Fa. General Electric Plastics), 1 Gew.-% Octadecyl-3-(3,5-di-tert.butyl-4-hydroxyphenyl)-propionat (Produkt Irganox® 1076 von Fa. Ciba-Geigy) und 98 Gew.-% des Polymethylmethacrylates Komponente B-1.

D-5: Stabilisator-Masterbatch, enthaltend 10 Gew.-% eines sterisch gehinderten Amins (Produkt Uvinul® 4050H von Fa. BASF), 10 Gew.-% Ethyl-2-cyano-3,3'-diphenylacrylat (Produkt Uvinul® 3035 von Fa. BASF) und 80 Gew.-% des Polymethylmethacrylates Komponente B-1.

D-6: Copolymeres aus Methylmethacrylat, Styrol und Maleinsäureanhydrid.
Es wurde ein handelsübliches Produkt aus 75 Gew.-% Methylmethacrylat, 15 Gew.-% Styrol und 10 Gew.-% Maleinsäureanhydrid verwendet (Plexiglas® HW 55 von Fa. Röhm oder Degalan® HT 120 von Fa. Degussa).

D-7: Masterbatch, enthaltend 5 Gew.-% 1,1,3-Tri(2'-methyl-4'-hydroxy-5'-tert. butyl(phenyl)butan, 10 Gew.-% β,β'-Thiodipropionsäuredilaurylester, und 85 Gew.-% des Styrol-Acrylnitril-Copolymeren Komponente B-5.

D-8: Diisodecylphthalat

Die als feuchtes Pulver vorliegenden Komponenten A wurde dem Extruder über eine Feststoffdosiereinrichtung ESB-45, die Schmelzen der thermoplastischen Polymeren B mittels eines Seitenextruders ZSK 53 (Fa. Werner und Pfleiderer) zugeführt. Die Komponenten C und/oder D lagen als Pulver oder Granulat vor und wurden ebenfalls mittels eines Seitenextruders (ZSK 53 oder ZSK 25 des gleichen Herstellers) oder einer Granulatdosierung in den Extruder eingebracht. Die flüssigen Komponenten D-1 und D-8 wurden mit einer Pumpe zugeführt.

Aus den Komponenten B-5 und D-2 wurde eine Mischung D* hergestellt, enthaltend 95 Gew.-% B-1 und 5 Gew.-% D-2. Diese Mischung wurde gleichfalls mit einem Seitenextruder (ZSK 25) in den Extruder gegeben.

i) Messungen

Gemessen wurden der Wasseraustrag und der Kautschukaustrag in der ersten und zweiten Abquetschzone sowie die Strangfeuchte des austretenden Endproduktes. Diese Messungen wurden gravimetrisch vorgenommen.

Die als Dampf ausgetretene Wassermenge wurde durch Differenzbildung des anfänglichen Restwassergehaltes und der Summe des ausgetretenen flüssigen Wassers berechnet.

Aus den Austrägen an Wasser, Dampf und Kautschuk in kg/h wurden Prozentanteile berechnet. Die angegebenen %-Werte sind Gew.-% und beziehen sich für Wasser und Dampf auf den Wassergehalt des dem Extruder zugeführten Kautschuks (mit * markierte Zeile), der gleich 100 gesetzt wurde, und für Kautschuk auf die zugeführte Menge des feuchten Kautschuks (mit ** markierte Zeile), die gleich 100 gesetzt wurde. Die Strangfeuchte ist auf das erhaltene Endprodukt bezogen.

Tabelle 1 -

| Extruderkonfiguration I | | | |
|---|---|---|---|
| Beispiel | I-1 | I-2 | I-3 |
| Elastomerkomponente A<br>Art<br>Wassergehalt [Gew.-%]*<br>Zufuhr [kg/h]**<br>in Schuß Nr. | A-1<br>37<br>55,6<br>1 | A-1<br>37<br>53,9<br>1 | A-1<br>37<br>57,2<br>1 |
| thermoplastisches Polymeres B<br>Art<br>Zufuhr [kg/h]<br>in Schuß Nr. | B-2<br>43,1<br>5 | B-1<br>44,2<br>5 | B-1<br>42,0<br>5 |
| weiteres Polymeres C<br>Art<br>Zufuhr [kg/h]<br>in Schuß Nr. | -￼ | -￼ | -￼ |
| Zusatzstoffe D<br>Art<br>Zufuhr [kg/h]<br>in Schuß Nr.<br>Zufuhr durch [3] | -￼ | D-4<br>2,0<br>1<br>GD | D-5<br>2,4<br>1<br>GD |
| Extruder:<br>Drehzahl [min⁻¹]<br>Temperatur Schuß 5-12 [°C] | 300<br>250 | 300<br>250 | 300<br>250 |
| Abquetschabschnitt<br>Austrag Wasser [kg/h] [1]<br>Austrag Kautschuk [kg/h] [2] | 11,2 = 54 %<br>1,3 = 2 % | 11,9 = 60 %<br>1,3 = 2 % | 12,7 = 60 %<br>1,4 = 2 % |
| Entgasungsabschnitte<br>Dampfaustrag [kg/h] [1] | 9,2 = 45 % | 7,8 = 39 % | 8,3 = 39 % |
| Strangfeuchte [Gew.-%] | 0,2 | 0,2 | 0,2 |

[1] %-Werte bezogen auf Zeile * = 100

[2] %-Werte bezogen auf Zeile ** = 100

[3] GD Granulatdosierung

Tabelle 2 - Extruderkonfiguration II

| Beispiel | II-1 | II-2 | II-3 |
|---|---|---|---|
| Elastomerkomponente A<br>Art<br>Wassergehalt [Gew.-%]*<br>Zufuhr [kg/h]**<br>in Schuß Nr. | A-2<br>28<br>26,0<br>1 | A-2<br>28<br>26,0<br>1 | A-2<br>28<br>26,0<br>1 |
| thermoplastisches Polymeres B<br>Art<br>Zufuhr [kg/h]<br>in Schuß Nr. | B-3<br>79<br>5 | B-6<br>79<br>5 | B-4<br>79<br>5 |
| weiteres Polymeres C<br>Art<br>Zufuhr [kg/h]<br>in Schuß Nr. | - | - | - |
| Zusatzstoffe D<br>Art<br>Zufuhr [kg/h]<br>in Schuß Nr.<br>Zufuhr durch 3) | D-7<br>3<br>9<br>SE | D-7<br>3<br>9<br>SE | D-7<br>3<br>9<br>SE |
| Extruder (Hauptextruder):<br>Drehzahl [min$^{-1}$]<br>Temperatur Schuß 5-12 [°C] | 300<br>250 | 300<br>250 | 300<br>250 |
| Abquetschabschnitt<br>Austrag Wasser [kg/h] 1)<br>Austrag Kautschuk [kg/h] 2) | 2,0 = 27 %<br>0,4 = 2 % | 1,9 = 26 %<br>0,5 = 2 % | 2,7 = 37 %<br>0,6 = 2 % |
| Entgasungsabschnitte<br>Dampfaustrag [kg/h] 1) | 5,3 = 73 % | 5,4 = 74 % | 4,6 = 63 % |
| Strangfeuchte [Gew.-%] | < 0,1 | < 0,1 | < 0,1 |

1) %-Werte bezogen auf Zeile * = 100

2) %-Werte bezogen auf Zeile ** = 100

3) SE Seitenextruder

Fortsetzung Tabelle 2

| Beispiel | II-4 | II-5 | II-6 |
|---|---|---|---|
| Elastomerkomponente A<br>Art<br>Wassergehalt [Gew.-%]*<br>Zufuhr [kg/h]**<br>in Schuß Nr. | A-4<br>34<br>49,3<br>1 | A-3<br>28<br>34,7<br>1 | A-2<br>21<br>25,0<br>1 |
| thermoplastisches Polymeres B<br>Art<br>Zufuhr [kg/h]<br>in Schuß Nr. | B-6<br>40<br>5 | B-6<br>75<br>5 | B-4<br>25<br>5 |
| weiteres Polymeres C<br>Art<br>Zufuhr [kg/h]<br>in Schuß Nr.<br>Zufuhr durch [3] | C-5<br>8<br>9<br>SE | -<br><br><br> | C-6<br>18<br>9<br>SE |
| Zusatzstoffe D<br>Art<br>Zufuhr [kg/h]<br>in Schuß Nr.<br>Zufuhr durch [3] | D-3<br>8<br>9<br>SE | D-8<br>2<br>10<br>DP | -<br><br><br> |
| Extruder (Hauptextruder):<br>Drehzahl [min⁻¹]<br>Temperatur Schuß 5-12 [°C] | 300<br>250 | 300<br>250 | 300<br>250 |
| Abquetschabschnitt<br>Austrag Wasser [kg/h] [1]<br>Austrag Kautschuk [kg/h] [2] | 9,1 = 54 %<br>0,5 = 1 % | 3,4 = 35 %<br>0,7 = 2 % | 2,2 = 42 %<br>0,3 = 1 % |
| Entgasungsabschnitte<br>Dampfaustrag [kg/h] [1] | 7,5 = 45 % | 6,2 = 64 % | 3,0 = 57 % |
| Strangfeuchte [Gew.-%] | 0,2 | 0,2 | 0,1 |

[1]     %-Werte bezogen auf Zeile * = 100

[2]     %-Werte bezogen auf Zeile ** = 100

[3]     SE Seitenextruder, DP Dosierpumpe

28

Fortsetzung Tabelle 2

| Beispiel | II-7 | II-8 | II-9 |
|---|---|---|---|
| Elastomerkomponente A<br>Art<br>Wassergehalt [Gew.-%]*<br>Zufuhr [kg/h]**<br>in Schuß Nr. | A-3<br>29<br>32,0<br>1 | A-4<br>33<br>44,7<br>1 | A-3<br>29<br>42,4<br>1 |
| thermoplastisches Polymeres B<br>Art<br>Zufuhr [kg/h]<br>in Schuß Nr. | B-7<br>43<br>5 | B-8<br>60<br>5 | B-5<br>50<br>5 |
| weiteres Polymeres C<br>Art<br>Zufuhr [kg/h]<br>in Schuß Nr.<br>Zufuhr durch [3] | C-5  C-3<br>9    30<br>9    9<br>SE   SE | C-5<br>10<br>9<br>SE | C-4<br>20<br>9<br>SE |
| Zusatzstoffe D<br>Art<br>Zufuhr [kg/h]<br>in Schuß Nr.<br>Zufuhr durch [3] | D-6<br>3<br>1<br>GD | D-7<br>3<br>9<br>SE | D-7<br>3<br>9<br>SE |
| Extruder (Hauptextruder):<br>Drehzahl [min$^{-1}$]<br>Temperatur Schuß 5-12 [°C] | 300<br>250 | 300<br>250 | 300<br>250[4] |
| Abquetschabschnitt<br>Austrag Wasser [kg/h] [1]<br>Austrag Kautschuk [kg/h] [2] | 4,2  = 45 %<br>0,8  =  3 % | 7,2  = 49 %<br>1,0  =  2 % | 6,2  = 50 %<br>0,9  =  2 % |
| Entgasungsabschnitte<br>Dampfaustrag [kg/h] [1] | 5,1  = 55 % | 7,4  = 50 % | 6,1  = 50 % |
| Strangfeuchte [Gew.-%] | < 0,1 | 0,2 | < 0,1 |

[1]    %-Werte bezogen auf Zeile * = 100

[2]    %-Werte bezogen auf Zeile ** = 100

[3]    SE Seitenextruder, GD Granulatdosierung

[4]    Extruder (Hauptextruder) ab Schuß 9: 280°C, Seitenextruder:
        280°C

Tabelle 3 - Extruderkonfiguration III

| Beispiel | III-1 | III-2 | | | III-3 |
|---|---|---|---|---|---|
| Elastomerkomponente A<br>Art<br>Wassergehalt [Gew.-%]*<br>Zufuhr [kg/h]**<br>in Schuß Nr. | A-3<br>29<br>46,0<br>1 | A-3<br>29<br>38,0<br>1 | | | A-5<br>30<br>50,0<br>1 |
| thermoplastisches Polymeres B<br>Art<br>Zufuhr [kg/h]<br>in Schuß Nr. | B-6<br>32<br>6 | B-5<br>50<br>6 | | | B-5<br>46<br>6 |
| weiteres Polymeres C<br>Art<br>Zufuhr [kg/h]<br>in Schuß Nr.<br>Zufuhr durch [7] | C-1<br>16<br>10<br>SE | -<br><br><br> | | | -<br><br><br> |
| Zusatzstoffe D<br>Art<br>Zufuhr [kg/h]<br>in Schuß Nr.<br>Zufuhr durch [7] | -<br><br><br> | D-1<br>0,4<br>11<br>DP | D*[5]<br>4,0[6]<br>10<br>SE | D-3<br>10<br>10<br>SE | D-3<br>1,6<br>1<br>SE |
| Extruder (Hauptextruder):<br>Drehzahl [min$^{-1}$]<br>Temperatur Schuß 6-12 [°C] | 300<br>250 | 300<br>250 | | | 300<br>250 |
| 1. Abquetschabschnitt<br>Austrag Wasser [kg/h] [1]<br>Austrag Kautschuk [kg/h] [2] | 3,5 = 26 %<br>0,7 = 2 % | 2,5 = 23 %<br>0,9 = 2 % | | | 9,4 = 63 %<br>1,1 = 2 % |
| 2. Abquetschabschnitt<br>Austrag Wasser [kg/h] [1]<br>Austrag Kautschuk [kg/h] [2] | 2,7 = 20 %<br>0,4 = 1 % | 3,2 = 29 %<br>0,2 = 1 % | | | 0,2 = 1 %<br><0,1 = <1 % |
| Entgasungsabschnitte<br>Dampfaustrag [kg/h] [1] | 7,1 = 53 % | 5,2 = 47 % | | | 5,4 = 36 % |
| Strangfeuchte [Gew.-%] | < 0,1 | 0,1 | | | 0,2 |

[1]   %-Werte bezogen auf Zeile * = 100

[2]   %-Werte bezogen auf Zeile ** = 100

[5]   D* ist eine Mischung aus B-5 und D-2

[6]   Zufuhr der Mischung,entspricht 3,8 kg/h B-5 und 0,2 kg/h D-2

[7]   SE Seitenextruder, DP Dosierpumpe

30

Fortsetzung Tabelle 3

| Beispiel | III-4 | III-5 | III-6 |
|---|---|---|---|
| Elastomerkomponente A<br>Art<br>Wassergehalt [Gew.-%]*<br>Zufuhr [kg/h]**<br>in Schuß Nr. | A-5<br>35<br>63,0<br>1 | A-2<br>34<br>48,3<br>1 | A-2<br>34<br>47,4<br>1 |
| thermoplastisches Polymeres B<br>Art<br>Zufuhr [kg/h]<br>in Schuß Nr. | B-5<br>10<br>6 | B-5<br>30<br>6 | B-5<br>30<br>6 |
| weiteres Polymeres C<br>Art<br>Zufuhr [kg/h]<br>in Schuß Nr.<br>Zufuhr durch [3] | C-2<br>6<br>1<br>GD | C-1<br>12<br>10<br>SE | C-1<br>12<br>10<br>SE |
| Zusatzstoffe D<br>Art<br>Zufuhr [kg/h]<br>in Schuß Nr.<br>Zufuhr durch [3] | - | - | D-3<br>7,3<br>10<br>SE |
| Extruder (Hauptextruder):<br>Drehzahl [min$^{-1}$]<br>Temperatur Schuß 6-12 [°C] | 300<br>250 | 300<br>250 | 300<br>250 |
| 1. Abquetschabschnitt<br>Austrag Wasser [kg/h] [1]<br>Austrag Kautschuk [kg/h] [2] | 15,6 = 71 %<br>1,7 = 3 % | 6,0 = 37 %<br>0,9 = 2 % | 5,7 = 35 %<br>0,8 = 2 % |
| 2. Abquetschabschnitt<br>Austrag Wasser [kg/h] [1]<br>Austrag Kautschuk [kg/h] [2] | 0,2 = <1 %<br><0,1 = <1 % | 6,1 = 37 %<br>0,7 = 1 % | 5,5 = 34 %<br>0,8 = 2 % |
| Entgasungsabschnitte<br>Dampfaustrag [kg/h] [1] | 6,2 = 28 % | 4,1 = 25 % | 4,7 = 29 % |
| Strangfeuchte [Gew.-%] | 0,2 | < 0,1 | 0,1 |

[1]  %-Werte bezogen auf Zeile * = 100

[2]  %-Werte bezogen auf Zeile ** = 100

[3]  SE Seitenextruder, GD Granulatdosierung

Fortsetzung Tabelle 3

| Beispiel | III-7 | III-8 | | III-9 |
|---|---|---|---|---|
| Elastomerkomponente A<br>Art<br>Wassergehalt [Gew.-%]*<br>Zufuhr [kg/h]**<br>in Schuß Nr. | A-3<br>29<br>61,3<br>1 | A-3<br>29<br>42,0<br>1 | | A-3<br>29<br>41,0<br>1 |
| thermoplastisches Polymeres B<br>Art<br>Zufuhr [kg/h]<br>in Schuß Nr. | B-6<br>38<br>6 | B-6<br>70<br>6 | | B-6<br>46<br>6 |
| weiteres Polymeres C<br>Art<br>Zufuhr [kg/h]<br>in Schuß Nr.<br>Zufuhr durch 3) | C-7<br>20<br>10<br>SE | - | | C-1<br>12<br>10<br>SE |
| Zusatzstoffe D<br>Art<br>Zufuhr [kg/h]<br>in Schuß Nr.<br>Zufuhr durch 3) | D-8<br>0,5<br>11<br>DP | D-3<br>3,0<br>10<br>SE | D-8<br>0,7<br>11<br>DP | D-7<br>3,0<br>10<br>SE |
| Extruder (Hauptextruder):<br>Drehzahl [min⁻¹]<br>Temperatur Schuß 6-12 [°C] | 300<br>250 | 300<br>250 | | 300<br>250 |
| 1. Abquetschabschnitt<br>Austrag Wasser [kg/h] 1)<br>Austrag Kautschuk [kg/h] 2) | 5,4  = 30 %<br>1,0  =  2 % | 3,5  = 29 %<br>0,7  =  2 % | | 5,0  = 42 %<br>0,3  =  1 % |
| 2. Abquetschabschnitt<br>Austrag Wasser [kg/h] 1)<br>Austrag Kautschuk [kg/h] 2) | 3,3  = 19 %<br>0,5  =  1 % | 1,7  = 14 %<br>0,2  =  1 % | | 0,1  =  1 %<br><0,1  =  1 % |
| Entgasungsabschnitte<br>Dampfaustrag [kg/h] 1) | 9,0  = 51 % | 6,8   = 56 % | | 6,8   = 57 % |
| Strangfeuchte [Gew.-%] | 0,2 | 0,2 | | <0,1 |

1)  %-Werte bezogen auf Zeile * = 100

2)  %-Werte bezogen auf Zeile ** = 100

3)  SE Seitenextruder, DP Dosierpumpe

32

Fortsetzung Tabelle 3

| Beispiel | III-10 |
|---|---|
| Elastomerkomponente A<br>Art<br>Wassergehalt [Gew.-%]*<br>Zufuhr [kg/h]**<br>in Schuß Nr. | A-3<br>30<br>40,0<br>1 |
| thermoplastisches Polymeres B<br>Art<br>Zufuhr [kg/h]<br>in Schuß Nr. | B-6<br>38<br>6 |
| weiteres Polymeres C<br>Art<br>Zufuhr [kg/h]<br>in Schuß Nr.<br>Zufuhr durch 3) | C-5<br>20<br>10<br>SE |
| Zusatzstoffe D<br>Art<br>Zufuhr [kg/h]<br>in Schuß Nr.<br>Zufuhr durch 3) | D-3   D-8<br>2,7   0,6<br>10   11<br>SE   DP |
| Extruder (Hauptextruder):<br>Drehzahl [min⁻¹]<br>Temperatur Schuß 6-12 [°C] | 300<br>250 |
| 1. Abquetschabschnitt<br>Austrag Wasser [kg/h] 1)<br>Austrag Kautschuk [kg/h] 2) | 3,4  = 28 %<br>0,2  =  1 % |
| 2. Abquetschabschnitt<br>Austrag Wasser [kg/h] 1)<br>Austrag Kautschuk [kg/h] 2) | 1,5  = 13 %<br><0,1  = <1 % |
| Entgasungsabschnitte<br>Dampfaustrag [kg/h] 1) | 7,1  = 59 % |
| Strangfeuchte [Gew.-%] | <0,1 |

1)   %-Werte bezogen auf Zeile * = 100
2)   %-Werte bezogen auf Zeile ** = 100
3)   SE Seitenextruder, DP Dosierpumpe

33

Tabelle 4 - Extruderkonfiguration IV

| Beispiel | IV-1 | IV-2 | IV-3 |
|---|---|---|---|
| Elastomerkomponente A<br>Art<br>Wassergehalt [Gew.-%] *<br>Zufuhr [kg/h] **<br>in Schuß Nr. | A-3<br>30<br>45,2<br>1 | A-3<br>30<br>45,2<br>1 | A-3<br>30<br>45,2<br>1 |
| thermoplastisches Polymeres B<br>Art<br>Zufuhr [kg/h]<br>in Schuß Nr. | B-6<br>35,2<br>5 | B-6<br>17,6<br>5 | B-6<br>32,5<br>5 |
| weiteres Polymeres C<br>Art<br>Zufuhr [kg/h]<br>in Schuß Nr.<br>Zufuhr durch [3] | - | C-5<br>17,6<br>9<br>SE | C-5<br>32,5<br>9<br>SE |
| Zusatzstoffe D<br>Art<br>Zufuhr [kg/h]<br>in Schuß Nr.<br>Zufuhr durch [3] | - | - | - |
| Extruder (Hauptextruder):<br>Drehzahl [min$^{-1}$]<br>Temperatur Schuß 5-12 [°C] | 300<br>240 | 300<br>240 | 300<br>240 |
| 1. Abquetschabschnitt<br>Austrag Wasser [kg/h] [1]<br>Austrag Kautschuk [kg/h] [2] | 4,9 = 36 %<br>0,3 = 1 % | 5,3 = 39 %<br>0,2 = <1 % | 6,8 = 50 %<br>0,2 = <1 % |
| 2. Abquetschabschnitt<br>Austrag Wasser [kg/h] [1]<br>Austrag Kautschuk [kg/h] [2] | 0<br>0 | 0<br>0 | 0<br>0 |
| Entgasungsabschnitte<br>Dampfaustrag [kg/h] [1] | 8,6 = 63 % | 8,2 = 61 % | 6,7 = 49 % |
| Strangfeuchte [Gew.-%] | <0,1 | <0,1 | <0,1 |

[1]   %-Werte bezogen auf Zeile * = 100

[2]   %-Werte bezogen auf Zeile ** = 100

[3]   SE Seitenextruder

Forts. Tabelle 4 - Extruderkonfiguration IV

| Beispiel | IV-4 | IV-5 | IV-6 |
|---|---|---|---|
| Elastomerkomponente A<br>Art<br>Wassergehalt [Gew.-%]*<br>Zufuhr [kg/h]**<br>in Schuß Nr. | A-3<br>30<br>45,2<br>1 | A-3<br>30<br>45,2<br>1 | A-3<br>30<br>37,6<br>1 |
| thermoplastisches Polymeres B<br>Art<br>Zufuhr [kg/h]<br>in Schuß Nr. | B-6<br>45<br>5 | B-5<br>40<br>5 | B-5<br>15<br>5 |
| weiteres Polymeres C<br>Art<br>Zufuhr [kg/h]<br>in Schuß Nr.<br>Zufuhr durch 3) | C-5<br>45<br>9<br>SE | C-3<br>30<br>9<br>SE | C-3<br>60<br>9<br>SE |
| Zusatzstoffe D<br>Art<br>Zufuhr [kg/h]<br>in Schuß Nr.<br>Zufuhr durch 3) | - | - | - |
| Extruder (Hauptextruder):<br>Drehzahl [min$^{-1}$]<br>Temperatur Schuß 5-12 [°C] | 300<br>240 | 300<br>240 | 300<br>240 |
| 1. Abquetschabschnitt<br>Austrag Wasser [kg/h] 1)<br>Austrag Kautschuk [kg/h] 2) | 5,6 = 36 %<br>0,2 = 1 % | 6,1 = 45 %<br>0,3 = 1 % | 4,7 = 42 %<br>0,2 = 1 % |
| 2. Abquetschabschnitt<br>Austrag Wasser [kg/h] 1)<br>Austrag Kautschuk [kg/h] 2) | 0<br>0 | 0<br>0 | 0<br>0 |
| Entgasungsabschnitte<br>Dampfaustrag [kg/h] 1) | 9,7 = 63 % | 7,4 = 55 % | 6,6 = 59 % |
| Strangfeuchte [Gew.-%] | <0,1 | <0,1 | <0,1 |

1) %-Werte bezogen auf Zeile * = 100

2) %-Werte bezogen auf Zeile ** = 100

3) SE Seitenextruder

Tabelle 5-

| Extruderkonfiguration V | | |
|---|---|---|
| Beispiel | V-1 | V-2 |
| Elastomerkomponente A<br>Art<br>Wassergehalt [Gew.-%]*<br>Zufuhr [kg/h]**<br>in Schuß Nr. | A-3<br>34,9<br>159,1<br>1 | A-3<br>30,0<br>157,1<br>1 |

Tabelle 5-   (fortgesetzt)

| Extruderkonfiguration V | | |
|---|---|---|
| Beispiel | V-1 | V-2 |
| thermoplastisches Polymeres B<br>Art<br>Zufuhr [kg/h]<br>in Schuß Nr. | B-25<br>43,1<br>5 | B-5<br>44,2<br>5 |
| weiteres Polymeres C<br>Art<br>Zufuhr [kg/h]<br>in Schuß Nr.<br>Zufuhr durch | - | - |
| Zusatzstoffe D<br>Art<br>Zufuhr [kg/h]<br>in Schuß Nr.<br>Zufuhr durch | - | - |
| Extruder (Hauptextruder) :<br>Drehzahl [min$^{-1}$]<br>Temperatur Schuß 5-10 [°C] | 285<br>250 | 285<br>250 |
| 1. Abquetschabschnitt<br>Austrag Wasser [kg/h] [1]<br>Austrag Kautschuk [kg/h] [2] | 25,0 = 45 %<br>7,9 = 5 % | 9,9 = 21 %<br>2,5 = 2 % |
| 2. Abquetschabschnitt<br>Austrag Wasser [kg/h] [1]<br>Austrag Kautschuk [kg/h] [2] | 7,9 = 14%<br>2,4 = 2% | 5,4 = 11%<br>0,1 = <1% |
| Entgasungsabschnitte<br>Dampfaustrag [kg/h] [1] | 22,6 = 41 % | ,8 = 67 % |
| Strangfeuchte [Gew.-%] | <0,1 | <0,1 |

[1] %-Werte bezogen auf Zeile * = 100
[2] %-Werte bezogen auf Zeile ** = 100

Tabelle 6 - Extruderkonfiguration VI

| Beispiel | VI-1 | VI-2 | VI-3 |
|---|---|---|---|
| Elastomerkomponente A<br>Art<br>Wassergehalt [Gew.-%]*<br>Zufuhr [kg/h]**<br>in Schuß Nr. | A-3<br>30<br>42,1<br>1 | A-3<br>25<br>42,1<br>1 | A-3<br>25<br>42,1<br>1 |
| thermoplastisches Polymeres B<br>Art<br>Zufuhr [kg/h]<br>in Schuß Nr. | B-6<br>90<br>5 | B-6<br>38,2<br>5 | B-6<br>32,9<br>5 |
| weiteres Polymeres C<br>Art<br>Zufuhr [kg/h]<br>in Schuß Nr.<br>Zufuhr durch [3] | -<br><br><br> | C-5<br>72<br>9<br>SE | C-5<br>53,5<br>9<br>SE |
| Zusatzstoffe D<br>Art<br>Zufuhr [kg/h]<br>in Schuß Nr.<br>Zufuhr durch [3] | - | - | - |
| Extruder (Hauptextruder):<br>Drehzahl [min⁻¹]<br>Temperatur Schuß 6-12 [°C] | 300<br>240 | 300<br>240 | 300<br>240 |
| 1. Abquetschabschnitt<br>Austrag Wasser [kg/h] [1]<br>Austrag Kautschuk [kg/h] [2] | 4,2 = 33 %<br>0,1 = <1 % | 3,7 = 35 %<br>0,1 = <1 % | 3,6 = 34 %<br>0,1 = <1 % |
| 2. Abquetschabschnitt<br>Austrag Wasser [kg/h] [1]<br>Austrag Kautschuk [kg/h] [2] | 0<br>0 | 0<br>0 | 0<br>0 |
| Entgasungsabschnitte<br>Dampfaustrag [kg/h] [1] | 8,4 = 67 % | 6,8 = 64 % | 6,9 = 65 % |
| Strangfeuchte [Gew.-%] | 0,1 | < 0,1 | < 0,1 |

[1]   %-Werte bezogen auf Zeile * = 100

[2]   %-Werte bezogen auf Zeile ** = 100

[3]   SE Seitenextruder

Forts. Tabelle 6 - Extruderkonfiguration VI

| Beispiel | VI-4 | VI-5 | VI-6 |
|---|---|---|---|
| Elastomerkomponente A<br>Art<br>Wassergehalt [Gew.-%] *<br>Zufuhr [kg/h] **<br>in Schuß Nr. | A-3<br>25<br>42,1<br>1 | A-3<br>25<br>32,3<br>1 | A-3<br>25<br>35,1<br>1 |
| thermoplastisches Polymeres B<br>Art<br>Zufuhr [kg/h]<br>in Schuß Nr. | B-6<br>38,2<br>5 | B-9<br>30,8<br>5 | B-6<br>30,8<br>5 |
| weiteres Polymeres C<br>Art<br>Zufuhr [kg/h]<br>in Schuß Nr.<br>Zufuhr durch 3) | C-5<br>31,8<br>9<br>SE | C-8<br>46,2<br>9<br>SE | C-8<br>46,2<br>9<br>SE |
| Zusatzstoffe D<br>Art<br>Zufuhr [kg/h]<br>in Schuß Nr.<br>Zufuhr durch 3) | - | - | - |
| Extruder (Hauptextruder):<br>Drehzahl [min⁻¹]<br>Temperatur Schuß 6-12 [°C] | 300<br>240 | 300<br>240 | 300<br>240 |
| 1. Abquetschabschnitt<br>Austrag Wasser [kg/h] 1)<br>Austrag Kautschuk [kg/h] 2) | 3,5 = 33 %<br>0,1 = <1 % | 4,4 = 54 %<br>0,5 = 2 % | 3,2 = 36 %<br>0,3 = 1 % |
| 2. Abquetschabschnitt<br>Austrag Wasser [kg/h] 1)<br>Austrag Kautschuk [kg/h] 2) | 0<br>0 | 0<br>0 | 0<br>0 |
| Entgasungsabschnitte<br>Dampfaustrag [kg/h] 1) | 7,0 = 67 % | 3,7 = 46 % | 5,6 = 64 % |
| Strangfeuchte [Gew.-%] | < 0,1 | 0,1 | < 0,1 |

1) %-Werte bezogen auf Zeile * = 100

2) %-Werte bezogen auf Zeile ** = 100

3) SE Seitenextruder

Forts. Tabelle 6 - Extruderkonfiguration VI

| Beispiel | VI-7 | VI-8 | VI-9 |
|---|---|---|---|
| Elastomerkomponente A<br>Art<br>Wassergehalt [Gew.-%]*<br>Zufuhr [kg/h]**<br>in Schuß Nr. | A-3<br>25<br>42,1<br>1 | A-3<br>25<br>42,1<br>1 | A-3<br>25<br>42,1<br>1 |
| thermoplastisches Polymeres B<br>Art<br>Zufuhr [kg/h]<br>in Schuß Nr. | B-9<br>50<br>5 | B-9<br>30,8<br>5 | B-6<br>30,8<br>5 |
| weiteres Polymeres C<br>Art<br>Zufuhr [kg/h]<br>in Schuß Nr.<br>Zufuhr durch 3) | C-9<br>50<br>9<br>SE | C-8<br>46,2<br>9<br>SE | C-8<br>46,2<br>9<br>SE |
| Zusatzstoffe D<br>Art<br>Zufuhr [kg/h]<br>in Schuß Nr.<br>Zufuhr durch 3) | - | - | - |
| Extruder (Hauptextruder):<br>Drehzahl [min⁻1]<br>Temperatur Schuß 6-12 [°C] | 300<br>240 | 300<br>240 | 300<br>240 |
| 1. Abquetschabschnitt<br>Austrag Wasser [kg/h] 1)<br>Austrag Kautschuk [kg/h] 2) | 5,3 = 50 %<br>1,6 = 4 % | 5,9 = 56 %<br>1,7 = 4 % | 4,2 = 40 %<br>1,1 = 3 % |
| 2. Abquetschabschnitt<br>Austrag Wasser [kg/h] 1)<br>Austrag Kautschuk [kg/h] 2) | 0<br>0 | 0<br>0 | 0<br>0 |
| Entgasungsabschnitte<br>Dampfaustrag [kg/h] 1) | 5,2 = 49 % | 4,6 = 43 % | 6,3 = 60 % |
| Strangfeuchte [Gew.-%] | 0,2 | 0,2 | 0,2 |

1)   %-Werte bezogen auf Zeile * = 100

2)   %-Werte bezogen auf Zeile ** = 100

3)   SE Seitenextruder

Tabelle 7 - Extruderkonfiguration VII

| Beispiel | VII-1 | VII-2 | VII-3 |
|---|---|---|---|
| Elastomerkomponente A<br>Art<br>Wassergehalt [Gew.-%]*<br>Zufuhr [kg/h]**<br>in Schuß Nr. | A-3<br>30<br>34,6<br>1 | A-3<br>30<br>34,6<br>1 | A-3<br>30<br>34,6<br>1 |
| thermoplastisches Polymeres B<br>Art<br>Zufuhr [kg/h]<br>in Schuß Nr. | B-6<br>76,3<br>4 | B-6<br>76,3<br>4 | B-6<br>76,3<br>4 |
| weiteres Polymeres C<br>Art<br>Zufuhr [kg/h]<br>in Schuß Nr.<br>Zufuhr durch | - | - | - |
| Zusatzstoffe D<br>Art<br>Zufuhr [kg/h]<br>in Schuß Nr.<br>Zufuhr durch | - | - | - |
| Extruder (Hauptextruder):<br>Drehzahl [min$^{-1}$]<br>Temperatur Schuß 4 - 12 [°C] | 260<br>240 | 240<br>240 | 220<br>240 |
| 1. Abquetschabschnitt<br>Austrag Wasser [kg/h] [1]<br>Austrag Kautschuk [kg/h] [2] | 4,9 = 47 %<br>0,6 = 2 % | 4,9 = 47 %<br>0,5 = 1 % | 5,1 = 49 %<br>0,6 = 2 % |
| 2. Abquetschabschnitt<br>Austrag Wasser [kg/h] [1]<br>Austrag Kautschuk [kg/h] [2] | 0<br>0 | 0<br>0 | 0<br>0 |
| Entgasungsabschnitte<br>Dampfaustrag [kg/h] [1] | 5,5 = 52 % | 5,5 = 52 % | 5,2 = 51 % |
| Strangfeuchte [Gew.-%] | 0,1 | 0,1 | 0,1 |

[1] %-Werte bezogen auf Zeile * = 100

[2] %-Werte bezogen auf Zeile ** = 100

Forts. Tabelle 7 - Extruderkonfiguration VII

| Beispiel | VII-4 | VII-5 | VII-6 |
|---|---|---|---|
| Elastomerkomponente A<br>Art<br>Wassergehalt [Gew.-%]*<br>Zufuhr [kg/h]**<br>in Schuß Nr. | A-3<br>30<br>34,6<br>1 | A-3<br>30<br>34,6<br>1 | A-3<br>30<br>34,6<br>1 |
| thermoplastisches Polymeres B<br>Art<br>Zufuhr [kg/h]<br>in Schuß Nr. | B-6<br>71,3<br>4 | B-6<br>76,3<br>4 | B-6<br>71,3<br>4 |
| weiteres Polymeres C<br>Art<br>Zufuhr [kg/h]<br>in Schuß Nr.<br>Zufuhr durch [3] | C-6<br>5<br>1<br>GD | - | C-6<br>5<br>1<br>GD |
| Zusatzstoffe D<br>Art<br>Zufuhr [kg/h]<br>in Schuß Nr.<br>Zufuhr durch [3] | - | - | - |
| Extruder (Hauptextruder):<br>Drehzahl [min$^{-1}$]<br>Temperatur Schuß 4-12 [°C] | 220<br>240 | 300<br>240 | 300<br>240 |
| Abquetschabschnitt<br>Austrag Wasser [kg/h] [1]<br>Austrag Kautschuk [kg/h] [2] | 4,1 = 39 %<br>0,5 = 1 % | 4,2 = 40 %<br>0,5 = 1 % | 5,0 = 48 %<br>0,6 = 2 % |
| Entgasungsabschnitte<br>Dampfaustrag [kg/h] [1] | 6,3 = 61 % | 6,2 = 60 % | 5,3 = 51 % |
| Strangfeuchte [Gew.-%] | 0,1 | 0,1 | 0,1 |

[1]   %-Werte bezogen auf Zeile * = 100

[2]   %-Werte bezogen auf Zeile ** = 100

[3]   GD Granulatdosierung

## Forts. Tabelle 7 - Extruderkonfiguration VII

| Beispiel | VII-7 |
|---|---|
| Elastomerkomponente A<br>Art<br>Wassergehalt [Gew.-%]*<br>Zufuhr [kg/h]**<br>in Schuß Nr. | A-3<br>30<br>34,6<br>1 |
| thermoplastisches Polymeres B<br>Art<br>Zufuhr [kg/h]<br>in Schuß Nr. | B-6<br>76,3<br>4 |
| weiteres Polymeres C<br>Art<br>Zufuhr [kg/h]<br>in Schuß Nr.<br>Zufuhr durch | - |
| Zusatzstoffe D<br>Art<br>Zufuhr [kg/h]<br>in Schuß Nr.<br>Zufuhr durch | - |
| Extruder (Hauptextruder):<br>Drehzahl [min$^{-1}$]<br>Temperatur Schuß 4-12 [ºC] | 280<br>240 |
| Abquetschabschnitt<br>Austrag Wasser [kg/h] [1]<br>Austrag Kautschuk [kg/h] [2] | 3,7 = 36 %<br>0,4 = 1 % |
| Entgasungsabschnitte<br>Dampfaustrag [kg/h] [1] | 6,6 = 63 % |
| Strangfeuchte [Gew.-%] | <0,1 |

[1]   %-Werte bezogen auf Zeile * = 100

[2]   %-Werte bezogen auf Zeile ** = 100

Die 46 Beispiele belegen die Vielseitigkeit des erfindungsgemäßen Verfahrens. Es wurden fünf verschiedene Elastomerkomponenten A, neun verschiedene thermoplastische Polymere B, neun verschiedene weitere Polymere C und acht verschiedene Zusatzstoffe D in den unterschiedlichsten Kombinationen eingesetzt, wodurch schlagzäh modifizierte Thermoplasten bzw. Polymerblends verschiedenster Art hergestellt wurden.

In den Beispielen wurden 26 Gew.-% (Bsp. II-2) bis 74 Gew.-% (Bsp. III-5, Summe aus beiden Abquetschabschnitten) des anfänglich im teilentwässerten Kautschuk enthaltenen Restwassers in den Abquetschabschnitten als flüssiges Wasser entfernt. Das arithmetische Mittel über alle 46 Beispiele des in den Abquetschabschnitten entfernten Restwassers betrug 46 Gew.-%. Der an 100 Gew.-% fehlende Anteil wurde (bis auf die geringe Strangfeuchte von maximal 0,2 Gew.-%) in den Entgasungsabschnitten als Dampf entfernt. Die bei der Summe von Austrag an abgequetschtem Wasser plus Dampfaustrag an 100 Gew.-% fehlenden Prozente sind überwiegend auf Rundungsungenauigkeiten zurückzuführen.

Der Kautschukaustrag ist mit durchschnittlich ca. 2 Gew.-% und maximal etwa 5 Gew.-% der Menge des feuchten Kautschuks (Bsp. V-1) gering.

Die Beispiele belegen die Flexibilität des Verfahrens auch bezüglich des Durchsatzes. Die Mengenströme der einzelnen Komponenten konnten in einem weiten Bereich variiert werden:

- Elastomerkomponente A: 25,0 kg/h (Bsp. II-6) bis 159,1 kg/h (Bsp. V-1),

- thermoplastisches Polymeres B: 10 kg (Bsp. III-4) bis 124,2 kg/h (Bsp. V-1 und V-2),
- weitere Polymere C: 5 kg/h (Bsp. VII-4 und VII-6) bis 60 kg/h (Bsp. IV-6),
- Zusatzstoffe D: 0,5 kg/h (Bsp. III-7) bis 8 kg/h (Bsp. II-4).

Insbesondere ließen sich sowohl Produkte mit geringem Elastomergehalt als auch Produkte mit hohem Elastomergehalt herstellen.

Die einzelnen Komponenten konnten in verschiedenen Schüssen dem Extruder zugeführt werden: In den Beispielen wurde

- Komponente B in Schuß 4 (Bsp. VII), in Schuß 5 (Bsp. I, II, IV, V, VI), oder in Schuß 6 (Bsp. III);
- Komponente C in Schuß 1 (Bsp. III-4, VII-4, VII-6), in Schuß 9 (Bsp. II-4, II-6 bis II-9, IV-2 bis IV-6, VI-2 bis VI-9, oder in Schuß 10 (Bsp. III-1, III-5 bis III-7, III-9, III-10);
- Komponente D in Schuß 1 (Bsp. I-2, I-3, II-7, III-3), in Schuß 9 (Bsp. II-1 bis II-4, II-8, II-9), in Schuß 10 (Bsp. II-5, III-6, III-9), in Schuß 11 (Bsp. III-7) oder in Schuß 10 und 11 (Bsp. III-2, III-8, III-10)

zugeführt. Der Ort der Zufuhr war demnach gleichfalls variabel.

Für das Verfahren wurden Extruder mit verschiedenen Schneckendurchmessern (40 mm und 58 mm) eingesetzt. Die Schneckendrehzahl wurde gleichfalls variiert und wurde in den Beispielen zwischen 300 min$^{-1}$ und 220 min$^{-1}$ eingestellt: 300 min$^{-1}$, 285 min-1 (Bsp. V), 220 bis 300 min$^{-1}$ (Bsp, VII).

Der Extruder konnte auch mit einem "trockenen" zweiten Abquetschabschnitt (kein Wasseraustrag) problemlos betrieben werden (Bsp. IV, VI, VII).

Der Extruder konnte in jeder seiner sieben Konfigurationen über lange Zeit störungsfrei betrieben werden. Dabei wurden - bei wechselnden Produkten - Extruderlaufzeiten von mehreren hundert Stunden erreicht, in denen der Extruder störungsfrei arbeitete.

**Patentansprüche**

1. Verfahren zur Herstellung von schlagzäh modifizierten Thermoplasten oder schlagzäh modifizierte Thermoplaste enthaltende Polymerblends, wobei die Thermoplasten bzw. die Polymerblends

   A) 5 bis 95 Gew.-% mindestens einer wasserfeuchten, bis zu 60 Gew.-% Restwasser enthaltenden Elastomerkomponente A,

   B) 5 bis 95 Gew.-% mindestens eines thermoplastischen Polymeren B,

   C) 0 bis 95 Gew.-% mindestens eines weiteren Polymeren C, und

   D) 0 bis 70 Gew.-% Zusatzstoffe D

   enthalten,

   durch Vermischen der Elastomerkomponente A mit dem thermoplastischen Polymeren B sowie, sofern vorhanden, dem weiteren Polymeren C und, sofern vorhanden, den Zusatzstoffen D in einer Schneckenmaschine unter mechanischer Entwässerung der Elastomerkomponente A, dadurch gekennzeichnet,

   daß man die Komponenten A, B, C und D einem Extruder mit mindestens zwei gleichsinnig oder gegensinnig rotierenden Schnecken mit einem Schneckendurchmesser $D_{Schnecke}$ zuführt, wobei der Extruder in Förderrichtung (stromabwärts) im wesentlichen aus

   - mindestens einem Dosierabschnitt, in den mittels einer Dosiereinrichtung die Elastomerkomponente A dem Extruder zugeführt wird,

   - mindestens einem der Entwässerung der Elastomerkomponente A dienenden Abquetschabschnitt, der mindestens ein Stauelement, sowie jeweils mindestens eine zugehörige Entwässerungsöffnung, die sich in einem Abstand von mindestens einem Schneckendurchmesser $D_{Schnecke}$ vor dem (ersten) Stauelement stromaufwärts befindet, enthält, wobei als Entwässerungsöffnungen keine Seihergehäuse verwendet werden,

- mindestens einem Zufuhrabschnitt, in dem das thermoplastische Polymere B als Schmelze in den Extruder eingeführt wird,

- mindestens einem mit Durchmischungs- und/oder Knetelementen versehenen Plastifizierungsabschnitt,

- mindestens einem mit mindestens einer Entgasungsöffnung versehenen Entgasungsabschnitt, in dem das restliche Wasser als Dampf entfernt wird, und

- einer Austragszone

aufgebaut ist,

daß das aus den Entwässerungsöffnungen austretende Wasser teilweise oder vollständig in flüssiger Phase vorliegt, und

daß die Komponenten C und/oder D gemeinsam oder getrennt voneinander entweder mit der Komponente A und/oder B zusammen oder getrennt von A und B einem oder mehreren der genannten Extruderabschnitte zugeführt werden.

2. Verfahren nach Anspruch 1, dadurch gekennzeichnet, daß der Extruder ein Zweischneckenextruder mit gleichsinnig rotierenden Schnecken ist.

3. Verfahren nach Anspruch 1 bis 2, dadurch gekennzeichnet, daß der Extruder zwischen dem letzten Entgasungsabschnitt und der Austragszone einen weiteren Abschnitt aufweist, in den mittels mindestens einer Dosiereinrichtung die Komponenten C und/oder D gemeinsam oder getrennt voneinander dem Extruder zugeführt werden, und daß dieser weitere Abschnitt mit Durchmischungs- und/oder Knetelementen versehen ist.

4. Verfahren nach Anspruch 1 bis 3, dadurch gekennzeichnet, daß die Dosiereinrichtung für die Komponenten C und/oder D ein Extruder ist.

5. Verfahren nach Anspruch 1 bis 4, dadurch gekennzeichnet, daß die Austragszone durch einen Düsenkopf und eine in Förderrichtung betrachtet vor dem Düsenkopf befindliche Vorrichtung zur Schmelzefiltration abgeschlossen ist.

6. Verfahren nach Anspruch 1 bis 5, dadurch gekennzeichnet, daß sich hinter dem Düsenkopf eine Vorrichtung zur Schmelzegranulierung befindet.

7. Verfahren nach Anspruch 1 bis 6, dadurch gekennzeichnet, daß die Vorrichtung zur Schmelzegranulierung unter Wasser betrieben wird (Unterwassergranulierung).

8. Verfahren nach Anspruch 1 bis 7, dadurch gekennzeichnet, daß der Extruder in den Dosierabschnitten für die Elastomerkomponente A und in den Abquetschabschnitten nicht beheizt wird.

9. Verfahren nach Anspruch 1 bis 8, dadurch gekennzeichnet, daß der Extruder stromabwärts im Bereich hinter dem Zufuhrabschnitt für die Schmelze des thermoplastischen Polymeren B und vor dem Ende des Extruders mindestens einen weiteren Zufuhrabschnitt für die Schmelze des thermoplastischen Polymeren B aufweist.

10. Verfahren nach Anspruch 1 bis 9, dadurch gekennzeichnet, daß sich der weitere Zufuhrabschnitt für die Schmelze des thermoplastischen Polymeren B zwischen dem letzten Entgasungsabschnitt und der Austragszone, oder in der Austragszone, befindet.

11. Verfahren nach Anspruch 1 bis 10, dadurch gekennzeichnet, daß in den Entgasungsabschnitten die Entgasungsöffnungen seitlich am Extruder angeordnet sind.

12. Verfahren nach Anspruch 1 bis 11, dadurch gekennzeichnet, daß die Komponenten C und/oder D dem Extruder auch im Entlüftungsabschnitt zugeführt werden.

13. Verfahren nach Anspruch 1 bis 12, dadurch gekennzeichnet, daß die Komponenten C und/oder D dem Extruder auch in dem Abschnitt, in dem das thermoplastische Polymere B in den Extruder eingeführt wird, zugeführt werden.

14. Verfahren nach Anspruch 1 bis 13, dadurch gekennzeichnet, daß die Komponenten C und/oder D dem Extruder auch im Dosierabschnitt zugeführt werden.

15. Verfahren nach Anspruch 1 bis 14, dadurch gekennzeichnet, daß die Schnecken des Zweischneckenextruders zweigängig sind.

16. Verfahren nach Anspruch 1 bis 15, dadurch gekennzeichnet, daß die Komponenten C und/oder D dem Extruder im Entgasungsabschnitt und/oder in einem weiteren Abschnitt, der sich unmittelbar vor der Austragszone befindet, zugeführt werden.

17. Verfahren nach Anspruch 1 bis 16, dadurch gekennzeichnet, daß die Schnecken des Extruders ein Gangtiefenverhältnis $D_{\text{Schnecke außen}}/D_{\text{Schnecke}}$ innen von 1,2 bis 1,8 aufweisen.

18. Verfahren nach Anspruch 1 bis 17, dadurch gekennzeichnet, daß der Extruder bei einer Schneckendrehzahl von 50 bis 1200 $\text{min}^{-1}$ und mittleren Schergeschwindigkeiten, bezogen auf die halbe Ganghöhe der Schnecke, von 15 bis 450 $\text{s}^{-1}$ betrieben wird.

19. Verfahren nach Anspruch 1 bis 18, dadurch gekennzeichnet, daß als Elastomerkomponente A mindestens ein Pfropfkautschuk mit einem Restwassergehalt von bis zu 60 Gew.-% eingesetzt wird.

20. Verfahren nach Anspruch 1 bis 19, dadurch gekennzeichnet, daß als Elastomerkomponente A ein zwei- oder mehrstufig aufgebauter Pfropfkautschuk, enthaltend eine Grundstufe aus einem oder mehreren der Monomeren Butadien, Styrol, Alkylstyrol, Alkylacrylat, Alkylmethacrylat und geringen Mengen anderer, auch vernetzender Monomerer und eine Pfropfstufe aus Styrol, Alkylstyrol, Acrylnitril, Methylmethacrylat oder Mischungen dieser Monomeren, verwendet wird, und als thermoplastisches Polymeres B ein Styrol-Acrylnitril-Copolymeres, ein α-Methylstyrol-Acrylnitril-Copolymeres, Polystyrol, Polymethylmethacrylat, Polyvinylchlorid oder Mischungen dieser Polymeren, eingesetzt wird.

21. Verfahren nach Anspruch 1 bis 20, dadurch gekennzeichnet, daß als Elastomerkomponente A ein Pfropfkautschuk auf Basis von Polybutadien und/oder Polyalkylacrylat als Grundstufe und einem Copolymeren aus Styrol und Acrylnitril als Pfropfstufe, und als thermoplastisches Polymeres B ein Styrol-Acrylnitril-Copolymeres, eingesetzt wird.

22. Verfahren nach Anspruch 1 bis 21, dadurch gekennzeichnet, daß als Elastomerkomponente A ein zwei- oder mehrstufig aufgebauter Pfropfkautschuk eingesetzt wird, der im wesentlichen aus Polyalkylacrylat und einem Copolymeren aus Styrol und Acrylnitril besteht, und als thermoplastisches Polymeres B ein Styrol-Acrylnitril-Copolymeres, eingesetzt wird.

23. Verfahren nach Anspruch 1 bis 22, dadurch gekennzeichnet, daß die Komponente C

- mit der Komponente B identisch ist, jedoch an anderer Stelle als die Komponente B dem Extruder zugeführt wird, oder

- ein thermoplastisches Polymeres auf Basis der zur Herstellung des thermoplastischen Polymeren B verwendeten Monomeren mit gleicher summarischer Zusammensetzung, jedoch mit anderer mittlerer Molmasse $\overline{M}_w$, oder mit anderen Mengenanteilen der Monomeren, oder

- ein Polymeres, erhalten durch Copolymerisation von $C_2$ bis $C_8$-Alkenen mit Vinylaromaten, mit polaren Comonomeren, mit Kohlenstoffmonoxid, mit nichtaromatischen Vinylverbindungen, und/oder mit basischen Monomeren, oder

- ein Polymeres auf Basis von a-Methylstyrol/Acrylnitril, oder Methylmethacrylat/Alkylacrylat, oder

- ein Polymeres auf Basis eines Kautschuks aus Butadien sowie gegebenenfalls Comonomeren, oder

- ein durch anionische Polymerisation hergestelltes Polymeres aus Butadien und Styrol, in dem die olefinischen Doppelbindungen ganz oder teilweise hydriert sein können, oder

- ein Polymeres auf Basis eines thermoplastischen Polyurethans, oder

- eine Polymeres auf Basis von Polycarbonat, oder

- in Polymeres auf Basis von Styrol, Acrylnitril, Methylmethacrylat, Maleinsäureanhydrid und Maleinimiden, oder

- eine Mischung aus mindestens zwei der genannten Polymeren,

ist.

24. Verfahren nach Anspruch 1 bis 23, dadurch gekennzeichnet, daß der Pfropfkautschuk partikelförmig ist und die Pfropfkautschuk-Partikel einen Durchmesser von 0,05 bis 20 μm haben.

25. Verfahren nach Anspruch 1 bis 24, dadurch gekennzeichnet, daß die Teilchengrößenverteilung der Pfropfkautschuk-Partikel ein Maximum (monomodal), zwei Maxima (bimodal) oder mehr als zwei Maxima aufweist.

26. Extruder mit mindestens zwei, gleichsinnig oder gegensinnig rotierenden Schnecken mit einem Schneckendurchmesser $D_{Schnecke}$, aufgebaut aus den Abschnitten gemäß den Ansprüchen 1 bis 25.

**Claims**

1. A process for the preparation of toughened thermoplastics or polymer blends containing toughened thermoplastics, the thermoplastics or the polymer blends comprising

   A) from 5 to 95% by weight of at least one water-moist elastomer component A containing up to 60% by weight of residual water,

   B) from 5 to 95% by weight of at least one thermoplastic polymer B,

   C) from 0 to 95% by weight of at least one further polymer C, and

   d) from 0 to 70% by weight of additives D,

   by mixing the elastomer component A with the thermoplastic polymer B and, if present, the further polymer C and, if present, the additives D in an extruder with mechanical dewatering of the elastomer component A, wherein the components A, B, C and D are fed to an extruder which has at least two screws rotating in the same direction or in opposite directions and having a screw diameter $D_{Screw}$, and, in the conveying direction (downstream), the extruder being essentially composed of

   - at least one metering section in which elastomer component A is fed to the extruder by a metering means,

   - at least one squeeze section which serves for dewatering the elastomer component A and contains at least one retarding element and in each case at least one associated dewatering orifice which is present upstream of the (first) retarding element by a distance corresponding to at least one screw diameter $D_{Screw}$,

   no Seiher housings being used as dewatering orifices,

   - at least one feed section in which the thermoplastic polymer B is introduced as a melt into the extruder,

   - at least one plastication section provided with mixing or kneading elements,

   - at least one devolatilization section which is provided with at least one devolatilization orifice and in which the remaining water is removed as steam, and

   - a discharge zone,

   wherein some or all of the water emerging from the dewatering orifices is present in the liquid phase, and wherein the components C and D are fed to one or more of the stated extruder sections together or separately from one another, either together with the components A or B or separately from A and B.

2. A process as claimed in claim 1, wherein the extruder is a twin-screw extruder having screws rotating in the same direction.

3. A process as claimed in claim 1 or 2, wherein the extruder has, between the last devolatilization section and the discharge zone, a further section in which the components C and D are fed to the extruder together or separately from one another by at least one metering means, and wherein this further section is provided with mixing or kneading elements.

4. A process as claimed in any of claims 1 to 3, wherein the metering means for the component C or D is an extruder.

5. A process as claimed in any of claims 1 to 4, wherein the discharge zone is terminated by a die head and a melt filtration apparatus present, when viewed in the conveying direction, before the die head.

6. A process as claimed in any of claims 1 to 5, wherein an apparatus for melt granulation is present behind the die head.

7. A process as claimed in any of claims 1 to 6, wherein the apparatus for melt granulation is operated under water (underwater granulation).

8. A process as claimed in any of claims 1 to 7, wherein the extruder is not heated in the metering sections for the elastomer component A and in the squeeze sections.

9. A process as claimed in any of claims 1 to 8, wherein the extruder has, downstream in the region behind the feed section for the melt of the thermoplastic polymer B and before the end of the extruder, at least one further feed section for the melt of the thermoplastic polymer B.

10. A process as claimed in any of claims 1 to 9, wherein the further feed section for the melt of the thermoplastic polymer B is located between the last devolatilization section and the discharge zone, or in the discharge zone.

11. A process as claimed in any of claims 1 to 10, wherein, in the devolatilization sections, the devolatilization orifices are arranged laterally on the extruder.

12. A process as claimed in any of claims 1 to 11, wherein the component C or D is fed to the extruder or in the vent section.

13. A process as claimed in any of claims 1 to 12, wherein the component C or D is fed to the extruder also in the section in which the thermoplastic polymer B is introduced into the extruder.

14. A process as claimed in any of claims 1 to 13, wherein the component C or D is fed to the extruder also in the metering section.

15. A process as claimed in any of claims 1 to 14, wherein the screws of the twin-screw extruder are two-flighted.

16. A process as claimed in any of claims 1 to 15, wherein the component C or D is fed to the extruder in the devolatilization section or in a further section which is located directly before the discharge zone.

17. A process as claimed in any of claims 1 to 16, wherein the screws of the extruder have a flight depth ratio $D_{Screw, external}/D_{Screw, internal}$ of from 1.2 to 1.8.

18. A process as claimed in any of claims 1 to 17, wherein the extruder is operated at a screw speed of from 50 to 1200 rpm and mean shear rates, based on half the flight depth of the screw, of from 15 to 450 s-1.

19. A process as claimed in any of claims 1 to 18, wherein at least one graft rubber having a residual water content of up to 60% by weight is used as elastomer component A.

**20.** A process as claimed in any of claims 1 to 19, wherein a two-stage or multistage graft rubber containing a base stage comprising one or more of the monomers butadiene, styrene, alkylstyrene, alkyl acrylate, alkyl methacrylate and small amounts of other monomers, including crosslinking monomers, and a graft stage comprising styrene, alkylstyrene, acrylonitrile, methyl methacrylate or a mixture of these monomers is used as elastomer component A, and a styrene/acrylonitrile copolymer, an $\alpha$-methylstyrene/ acrylonitrile copolymer, polystyrene, polymethyl methacrylate, polyvinyl chloride or a mixture of these polymers is used as the thermoplastic polymer B.

**21.** A process as claimed in any of claims 1 to 20, wherein a graft rubber based on polybutadiene or polyalkyl acrylate as the base stage and a copolymer of styrene and acrylonitrile as the graft stage is used as elastomer component A, and a styrene/acrylonitrile copolymer is used as the thermoplastic polymer B.

**22.** A process as claimed in any of claims 1 to 21, wherein a two-stage or multistage graft rubber which essentially comprises polyalkyl acrylate and a copolymer of styrene and acrylonitrile is used as elastomer component A, and a styrene/acrylonitrile copolymer is used as thermoplastic polymer B.

**23.** A process as claimed in any of claims 1 to 22, wherein the component C is

- identical to the component B but fed to the extruder at another point than the component B, or

- a thermoplastic polymer based on the monomers used for the preparation of the thermoplastic polymer B, having the same overall composition but with a different average molecular weight $\overline{M}_w$ or with other amounts of the monomers, or

- a polymer obtained by copolymerization of $C_2$-$C_8$-alkenes with vinylaromatics, with polar comonomers, with carbon monoxide, with nonaromatic vinyl compounds or with basic monomers, or

- a polymer based on $\alpha$-methylstyrene/acrylonitrile or methyl methacrylate/alkyl acrylate, or

- a polymer based on a rubber comprising butadiene and, if appropriate, comonomers, or

- a polymer prepared by anionic polymerization of butadiene and styrene, in which some or all of the olefinic double bonds may have been hydrogenated, or

- a polymer based on a thermoplastic polyurethane, or

- a polymer based on polycarbonate, or

- a polymer based on styrene, acrylonitrile, methyl methacrylate, maleic anhydride and maleimides, or

- a mixture of at least two of the stated polymers.

**24.** A process as claimed in any of claims 1 to 23, wherein the graft rubber is particulate and the graft rubber particles have a diameter of from 0.05 to 20 $\mu$m.

**25.** A process as claimed in any of claims 1 to 24, wherein the particle size distribution of the graft rubber particles has one maximum (monomodal), two maxima (bimodal) or more than two maxima.

**26.** An extruder which has at least two screws rotating in the same direction or in opposite directions and having a screw diameter $D_{Screw}$, composed of the sections as claimed in any of claims 1 to 25.

**Revendications**

**1.** Procédé de préparation de substances thermoplastiques modifiées quant à la résistance aux chocs ou de mélanges polymères contenant des substances thermoplastiques modifiées quant à la résistance aux chocs, les substances thermoplastiques ou les mélanges polymères contenant

A) 5 à 95% en poids d'au moins un composant élastomère A humide, contenant jusqu'à 60% en poids d'eau résiduaire,

B) 5 à 95% en poids d'au moins un polymère thermoplastique B,

C) 0 à 95% en poids d'au moins un autre polymère C, et

D) 0 à 70% en poids d'additifs D,

par mélange du composant élastomère A avec le polymère thermoplastique B ainsi que, dans la mesure où il y en a, l'autre polymère C et, dans la mesure où il y en a, les additifs D dans une machine à vis, avec déshydratation mécanique du composant élastomère A, caractérisé en ce que

on amène les composants A, B, C et D à une extrudeuse comportant au moins deux vis tournant dans le même sens ou en sens opposé et ayant un diamètre de vis $D_{vis}$, l'extrudeuse étant, dans le sens d'avancement (vers l'aval), essentiellement constituée

- d'au moins une section de dosage, dans laquelle le composant élastomère A est amené à l'extrudeuse au moyen d'un dispositif de dosage,
- d'au moins une section d'écrasement, qui sert à la déshydratation du composé élastomère A et qui contient au moins un élément de retenue, ainsi que respectivement au moins une ouverture de déshydratation correspondante, qui se situe en amont du (premier) élément de retenue à une distance d'au moins un diamètre de vis $D_{vis}$, aucun boîtier filtrant n'étant utilisé comme ouverture de déshydratation,
- d'au moins une section d'alimentation, dans laquelle le polymère thermoplastique B est introduit dans l'extrudeuse sous la forme d'une masse fondue,
- d'au moins une section de plastification pourvue d'éléments de mélange intime et/ou de pétrissage,
- d'au moins une section de dégazage qui est pourvue d'au moins une ouverture de dégazage et dans laquelle l'eau résiduaire est éliminée sous la forme de vapeur, et
- d'une zone de sortie,

en ce que l'eau sortant par les ouvertures de déshydratation se présente partiellement ou totalement en phase liquide, et

en ce que les composants C et/ou D sont amenés conjointement ou séparément l'un de l'autre, soit conjointement aux composants A et/ou B, soit isolément de A et de B, à une ou plusieurs des sections d'extrudeuse citées.

2. Procédé suivant la revendication 1, caractérisé en ce que l'extrudeuse est une extrudeuse à deux vis comportant des vis tournant dans le même sens.

3. Procédé suivant l'une des revendications 1 et 2, caractérisé en ce que l'extrudeuse présente, entre la dernière section de dégazage et la zone de sortie, une section supplémentaire dans laquelle les composants C et/ou D sont, au moyen d'au moins un dispositif de dosage, amenés à l'extrudeuse conjointement ou séparément l'un de l'autre et en ce que cette section supplémentaire est pourvue d'éléments de mélange intime et/ou de pétrissage.

4. Procédé suivant l'une des revendications 1 à 3, caractérisé en ce que le dispositif de dosage pour les composants C et/ou D est une extrudeuse.

5. Procédé suivant l'une des revendications 1 à 4, caractérisé en ce que la zone de sortie est terminée par une tête d'ajutage et par un dispositif de filtration de la masse fondue qui, considéré dans le sens d'avancement, est situé devant la tête d'ajutage.

6. Procédé suivant l'une des revendications 1 à 5, caractérisé en ce qu'un dispositif de granulation de la masse fondue se situe derrière la tête d'ajutage.

7. Procédé suivant l'une des revendications 1 à 6, caractérisé en ce que le dispositif de granulation de la masse fondue est mis en service sous l'eau (granulation sous eau).

8. Procédé suivant l'une des revendications 1 à 7, caractérisé en ce que l'extrudeuse n'est pas chauffée dans les sections de dosage du composant élastomère A et dans les sections d'écrasement.

9. Procédé suivant l'une des revendications 1 à 8, caractérisé en ce que l'extrudeuse présente, en aval dans la zone derrière la section d'alimentation de la masse fondue du polymère thermoplastique B et avant l'extrémité de l'extrudeuse, au moins une section d'alimentation supplémentaire pour la masse fondue du polymère thermoplastique B.

**10.** Procédé suivant l'une des revendications 1 à 9, caractérisé en ce que la section d'alimentation supplémentaire de la masse fondue du polymère thermoplastique B se situe entre la dernière section de dégazage et la zone de sortie, ou dans la zone de sortie.

**11.** Procédé suivant l'une des revendications 1 à 10, caractérisé en ce que les ouvertures de dégazage sont, dans les sections de dégazage, agencées latéralement à l'extrudeuse.

**12.** Procédé suivant l'une des revendications 1 à 11, caractérisé en ce que les composants C et/ou D sont amenés à l'extrudeuse également dans la section de désaération.

**13.** Procédé suivant l'une des revendications 1 à 12, caractérisé en ce que les composants C et/ou D sont amenés à l'extrudeuse également dans la section dans laquelle le polymère thermoplastique B est introduit dans l'extrudeuse.

**14.** Procédé suivant l'une des revendications 1 à 13, caractérisé en ce que les composants C et/ou D sont amenés à l'extrudeuse également dans la section de dosage.

**15.** Procédé suivant l'une des revendications 1 à 14, caractérisé en ce que les vis de l'extrudeuse à deux vis sont à deux filets.

**16.** Procédé suivant l'une des revendications 1 à 15, caractérisé en ce que les composants C et/ou D sont amenés à l'extrudeuse dans la section de dégazage et/ou dans une section supplémentaire qui se trouve directement en amont de la zone de sortie.

**17.** Procédé suivant l'une des revendications 1 à 16, caractérisé en ce que les vis de l'extrudeuse présentent un rapport de profondeur de pas $D_{\text{vis-extérieur/vis-intérieur}}$ de 1,2 à 1,8.

**18.** Procédé suivant l'une des revendications 1 à 17, caractérisé en ce que l'extrudeuse est mise en service à un nombre de tours de 50 à 1200 min$^{-1}$ et à des vitesses de cisaillement moyennes, par rapport à la moitié du pas de la vis, de 15 à 450 s$^{-1}$.

**19.** Procédé suivant l'une des revendications 1 à 18, caractérisé en ce que, comme composant élastomère A, on met en oeuvre au moins un caoutchouc de greffage ayant une teneur en eau résiduaire allant jusqu'à 60% en poids.

**20.** Procédé suivant l'une des revendications 1 à 19, caractérisé en ce que, comme composant élastomère A, on utilise un caoutchouc de greffage constitué de deux ou plusieurs phases et contenant une phase de base en un ou plusieurs des monomères butadiène, styrène, alkylstyrène, acrylate d'alkyle, méthacrylate d'alkyle et en de faibles quantités d'autres monomères également réticulants et une phase de greffage en styrène, alkylstyrène, acrylonitrile, méthacrylate de méthyle ou en mélanges de ces monomères, et en ce que, comme polymère thermoplastique B, on met en oeuvre un copolymère de styrène-acrylonitrile, un copolymère d'$\alpha$-méthylstyrène-acrylonitrile, du polystyrène, du polyméthacrylate de méthyle, du polychlorure de vinyle ou des mélanges de ces polymères.

**21.** Procédé suivant l'une des revendications 1 à 20, caractérisé en ce que, comme composant élastomère A, on met en oeuvre un caoutchouc de greffage à base de polybutadiène et/ou de polyacrylate d'alkyle comme phase de base et d'un copolymère de styrène et d'acrylonitrile comme phase de greffage, et, comme polymère thermoplastique B, un copolymère de styrène-acrylonitrile.

**22.** Procédé suivant l'une des revendications 1 à 21, caractérisé en ce que, comme composant élastomère A, on met en oeuvre un caoutchouc de greffage constitué de deux ou plusieurs phases, qui consiste essentiellement en polyacrylate d'alkyle et en un copolymère de styrène et d'acrylonitrile, et, comme polymère thermoplastique B, un copolymère de styrène-acrylonitrile.

**23.** Procédé suivant l'une des revendications 1 à 22, caractérisé en ce que le composant C

- est identique au composant B, mais est alimenté à l'extrudeuse à un autre endroit que le composant B, ou est
- un polymère thermoplastique à base du monomère utilisé pour la préparation du polymère thermoplastique B, ayant une composition sommaire identique, mais une autre masse molaire moyenne $\overline{M}_w$ ou d'autres fractions quantitatives des monomères, ou

- un polymère obtenu par copolymérisation d'alcènes en $C_2$-$C_8$ avec des substances aromatiques vinyliques, des comonomères polaires, du monoxyde de carbone, des composés vinyliques non aromatiques et/ou des monomères basiques, ou
- un polymère à base d'$\alpha$-méthylstyrène/acrylonitrile, ou de méthacrylate de méthyle/acrylate d'alkyle, ou
- un polymère à base d'un caoutchouc de butadiène ainsi qu'éventuellement de comonomères, ou
- un polymère de butadiène et de styrène qui est préparé par polymérisation anionique et dans lequel les doubles liaisons oléfiniques peuvent être totalement ou partiellement hydrogénées, ou
- un polymère à base d'un polyuréthanne thermoplastique, ou
- un polymère à base de polycarbonate, ou
- un polymère à base de styrène, d'acrylonitrile, de méthacrylate de méthyle, d'anhydride d'acide maléique et d'imides maléiques, ou
- un mélange d'au moins deux des polymères précités.

24. Procédé suivant l'une des revendications 1 à 23, caractérisé en ce que le caoutchouc de greffage est sous forme de particules et en ce que les particules du caoutchouc de greffage ont un diamètre de 0,05 à 20 $\mu$m.

25. Procédé suivant l'une des revendications 1 à 24, caractérisé en ce que la répartition granulométrique des particules du caoutchouc de greffage présente un maximum (monomodal), deux maxima (bimodaux) ou plus de deux maxima.

26. Extrudeuse comportant au moins deux vis tournant dans le même sens ou dans des sens opposés et ayant un diamètre de vis $D_{vis}$, constituée des sections suivant l'une des revendications 1 à 25.

Abb. 1

x) C und/oder D (fakultativ)